# EUROPEAN PATENT SPECIFICATION

(11) **EP 3 102 327 B1**
(45) Date of publication and mention of the grant of the patent: **10.10.2018**
(21) Application number: 15702799.6
(22) Date of filing: 06.02.2015
(51) Int. Cl.: B01J 31/22, C08G 64/34

(54) **CATALYST**
KATALYSATOR
CATALYSEUR

(30) Priority: 07.02.2014 GB 201402109
(43) Date of publication of application: 14.12.2016
(73) Proprietor: Imperial Innovations Ltd, London SW7 2PG (GB)
(72) Inventor: WILLIAMS, Charlotte, London SW7 2PG (GB); SAINI, Prabhjot, London SW7 2PG (GB); ROMAIN, Charles, London SW7 2PG (GB); GARDEN, Jennifer, London SW7 2PG (GB)
(74) Representative: Eldridge, Kathryn
(86) International application number: PCT/EP2015/052496
(87) International publication number: WO 2015/118100

(56) References cited:
- WO-A1-2009/130470
- WO-A2-2013/034750
- P. K. SAINI ET AL: "Dinuclear metal catalysts: improved performance of heterodinuclear mixed catalysts for CO2-epoxide copolymerization", CHEMICAL COMMUNICATIONS, vol. 50, no. 32, 20 February 2014 (2014-02-20), page 4164, XP55179323, ISSN: 1359-7345, DOI: 10.1039/c3cc49158g

## Description

### Technical Field

The present invention relates to the field of polymerisation catalysts, and in particular heterometallic catalysts and mixtures thereof, and systems comprising said catalysts for polymerising carbon dioxide and an epoxide, a lactide and/or lactone, or an epoxide and an anhydride.

### Background

Environmental and economic concerns associated with depleting oil resources have triggered a growing interest in the chemical conversion of carbon dioxide (CO₂), so as to enable its use as a renewable carbon source. CO₂ is, despite its low reactivity, a highly attractive carbon feedstock, as it is inexpensive, virtually non-toxic, abundantly available in high purity and non-hazardous. Therefore, CO₂ could be a promising substitute for substances such as carbon monoxide or phosgene in many processes. One of the developing applications of CO₂ is the copolymerization with epoxides to yield aliphatic polycarbonates, a field pioneered by Inoue *et al.* more than 40 years ago (Inoue, S. et al, J. Polym. Sci., Part B: Polym. Lett. 1969, 7, pp287).

In WO2009/130470 the copolymerisation of an epoxide with CO₂ using a catalyst of a class represented by formula (I) was described:

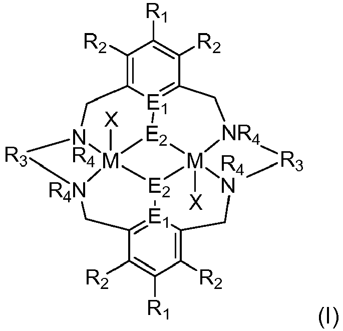

Among the epoxides employed in the copolymerization, cyclohexene oxide (CHO) received special interest, as the product, poly(cyclohexene carbonate) (PCHC) shows a high glass transition temperature and reasonable tensile strength. Propylene oxide has also received interest as it produces a polymer (polypropylene carbonate, known as PPC) with elastomeric properties which are useful in film applications. Kember et al (Angew. Chem., Int. Ed., 2009, 48, pp931 and Inorg. Chem., 2009, 48, pp9535) reported an air-stable di-zinc acetate complex, coordinated by a macrocyclic ligand, falling within formula (I) above, which shows high catalytic activity, even at ambient CO₂ pressure. The catalyst exhibits excellent copolymerization selectivity, giving high proportions of carbonate repeat units and low yields of cyclic cyclohexene carbonate (CHC) by-product. The di-zinc acetate complex is a rare example of a catalyst that is capable of high activity at ambient pressure (1 bar) of CO₂, yielding PCHC of moderate molecular weight, with narrow polydispersity index (PDI), and reaching remarkably high turnover numbers (TON).

WO2013/034750 discloses the copolymerisation of an epoxide with CO₂ in the presence of a chain transfer agent using a catalyst of a class represented by formula (I):

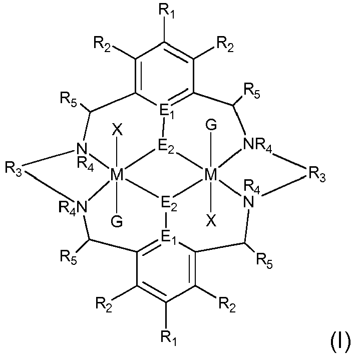

Various compounds according to formula (I) above were tested for their ability to catalyse the reaction between different epoxides and carbon dioxide. In each of these tested catalysts, both occurrences of M were the same (referred to hereinafter as homometallic catalysts). While WO2013/034750 contemplates that catalysts comprising two different metals (referred to hereinafter as heterometallic catalysts) could be used, such catalysts were not tested.

The inventors have now surprisingly found that heterometallic catalysts are also active as catalysts, and have activity which is comparable to, or better than either of the corresponding homometallic catalysts alone or a 50:50 mixture thereof. For example, the inventors have found that a catalyst containing one zinc and one magnesium metal centre surprisingly has better activity that the corresponding di-zinc or di-magnesium catalysts, or a 50:50 mixture of the corresponding di-zinc and di-magnesium catalyst. The inventive heterometallic catalysts and systems comprising such catalyst also unexpectedly retain their selectivity and degree of control over the polymer produced.

Thus, the present invention represents a novel and inventive selection over the prior art disclosures.

### Summary of Invention

In the first aspect of the invention, there is provided a catalyst of formula (I): 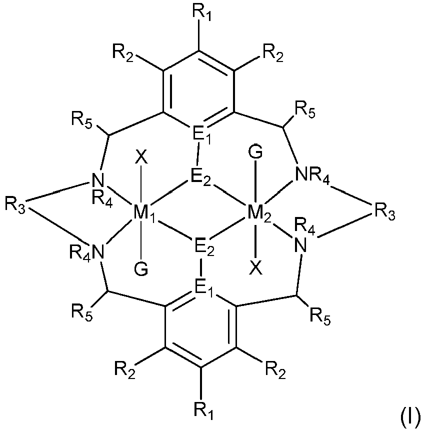 wherein:
M₁ is Zn and M₂ is Mg;
R₁ and R₂ are independently selected from hydrogen, halide, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
R₃ is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
R₄ is independently selected from H, or optionally substituted aliphatic, heteroaliphatic, alicyclic, heteroalicyclic, aryl, heteroaryl, alkylheteroaryl or alkylaryl;
R₅ is H, or optionally substituted aliphatic, heteroaliphatic, alicyclic, heteroalicyclic, aryl, heteroaryl, alkylheteroaryl or alkylaryl;
E₁ is C, E₂ is O;
X is independently selected from OC(O)R^{x}, OSO₂R^{x}, OSOR^{x}, OSO(R^{x})₂, S(O)R^{x}, OR^{x}, phosphinate, halide, nitrate, hydroxyl, carbonate, amino, amido or optionally substituted aliphatic, heteroaliphatic, alicyclic, heteroalicyclic, aryl or heteroaryl;
Rₓ is independently hydrogen, or optionally substituted aliphatic, haloaliphatic, heteroaliphatic, alicyclic, heteroalicyclic, aryl, alkylaryl or heteroaryl; and
G is absent or independently selected from a neutral or anionic donor ligand which is a Lewis base.

In a second aspect of the invention, there is provided a catalyst system comprising a catalyst according to the first aspect and optionally a second catalyst and/or a co-catalyst.

In a third aspect of the invention, there is provided a process for the reaction of (i) carbon dioxide with an epoxide, (ii) an anhydride and an epoxide, or (iii) a lactide and/or a lactone in the presence of a catalyst according to the first aspect or a catalyst system according to the second aspect, optionally in the presence of a chain transfer agent.

The fourth aspect of the invention provides a method for the synthesis of a catalyst of formula (I) 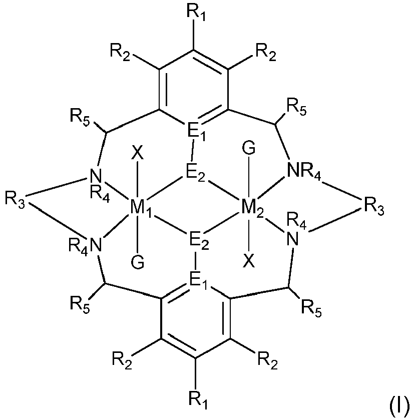 the method comprising:
a) Reacting a ligand of formula (Ib): 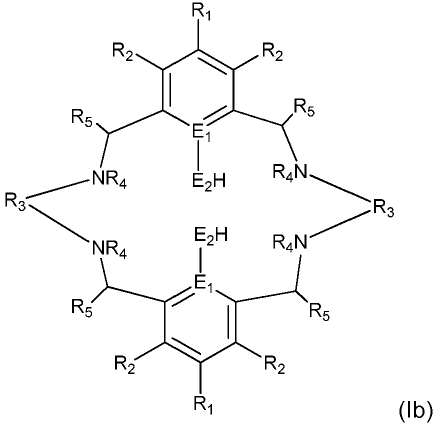 with a compound of formula (IV):

   M₁(R_{M1})ₙ (IV)

   n corresponds to the oxidation state of M₁;
   R_{M1} is independently selected from hydrogen, and an optionally substituted alkyl, alkenyl, alkynyl, cycloalkyl, cycloalkenyl, cycloalkynyl, aryl, heteroaryl, amino, alkoxy, aryloxy, alkylthio or alkylaryl; and
b) Reacting the product of step a) with a compound of formula (V):

   M₂(X)ₘ (V)

   wherein m corresponds to the oxidation state of M₂;
c) optionally adding a compound comprising G;
   wherein
   M₁ and M₂ are different and are independently selected from Mg, Zn, Fe, Co, Al and Cr;
   R₁ and R₂ are independently selected from hydrogen, halide, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
   R₃ is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
   R₄ is independently selected from H, or optionally substituted aliphatic, heteroaliphatic, alicyclic, heteroalicyclic, aryl, heteroaryl, alkylheteroaryl or alkylaryl;
   R₅ is H, or optionally substituted aliphatic, heteroaliphatic, alicyclic, heteroalicyclic, aryl, heteroaryl, alkylheteroaryl or alkylaryl;
   E₁ is C, E₂ is O, S or NH or E₁ is N and E₂ is O;
   X is independently selected from OC(O)R^{x}, OSO₂R^{x}, OSOR^{x}, OSO(R^{x})₂, S(O)R^{x}, OR^{x}, phosphinate, halide, nitrate, hydroxyl, carbonate, amino, amido or optionally substituted aliphatic, heteroaliphatic, alicyclic, heteroalicyclic, aryl or heteroaryl;
   Rₓ is independently hydrogen, or optionally substituted aliphatic, haloaliphatic, heteroaliphatic, alicyclic, heteroalicyclic, aryl, alkylaryl or heteroaryl; and
   G is absent or independently selected from a neutral or anionic donor ligand which is a Lewis base.

### Brief Description of Figures

Embodiments of the invention are described below by way of example and with reference to the accompanying drawings in which:
Figure 1: MALDI-ToF mass spectrum for product of Example 1a, **Catalyst System 1,** with the structures for the molecular ions illustrated.
Figure 2: ESI- mass spectrum for product of Example 1b, **Catalyst System 2,** with the structures for the molecular ions illustrated.
Figure 3: ESI- mass spectrum for product of Example 1c, **[L⁴ZnMg(OAc)₂]**, crystallised from **Catalyst System 2,** with the structures for the molecular ions illustrated.
Figure 4: ESI mass spectrum for product of Example 1d, **Catalyst System 3,** with the structures for the molecular ions illustrated.
Figure 5: ESI mass spectrum for product of Example 1e, **Catalyst System 4,** with the structures for the molecular ions illustrated.
Figure 6: ESI mass spectrum for product of Example 1f, **Catalyst System 5,** with the structures for the molecular ions illustrated.
Figure 7: ESI mass spectrum for product of Example 1g, **Catalyst System 6,** with the structures for the molecular ions illustrated.
Figure 8: MALDI-ToF mass spectrum for product of Example 1h, **Catalyst System 7,** with the structures for the molecular ions illustrated.
Figure 9: Comparison of ¹H NMR spectrum of **Catalyst System 7** (top) and the product of Example 1i, **[L¹MgZnBr₂]** (bottom) indicating the differences in purity.
Figure 10: MALDI-ToF mass spectrum for product of Example 1j, **Catalyst System 8,** with the structures for the molecular ions illustrated.
Figure 11: MALDI-ToF mass spectrum for product of Example 1k, **Catalyst System 9,** with the structures for the molecular ions illustrated.
Figure 12: MALDI-ToF mass spectrum for product of Example 1l, **Catalyst System 10,** with the structures for the molecular ions illustrated.
Figure 13: MALDI-ToF mass spectrum for product of Example 1m, **Catalyst System 11,** with the structures for the molecular ions illustrated.
Figure 14: MALDI-ToF mass spectrum for product of Example 1n, **Catalyst System 12,** with the structures for the molecular ions illustrated.
Figure 15: MALDI-ToF mass spectrum for product of Example 1o, **Catalyst System 13,** with the structures for the molecular ions illustrated.
Figure 16: ¹H NMR spectrum of crude CHO/CO₂ copolymerization reaction mixture used to calculate **Catalyst System 1**'s TON and TOF. The spectrum confirms the absence of signals due to cyclic carbonate (4 ppm) or ether linkages (3.4ppm) as by-products.
Figure 17: MALDI-ToF spectrum of the poly(cyclohexene carbonate) produced using **Catalyst System 1.**
Figure 18: MALDI-ToF spectrum of the poly(cyclohexene carbonate) produced by using **Catalyst System 1,** with 16 equivalents of water.

### Definitions

For the purpose of the present invention, an aliphatic group is a hydrocarbon moiety that may be straight chain or branched and may be completely saturated, or contain one or more units of unsaturation, but which is not aromatic. The term "unsaturated" means a moiety that has one or more double and/or triple bonds. The term "aliphatic" is therefore intended to encompass alkyl, alkenyl or alkynyl groups, and combinations thereof. An aliphatic group is preferably a C₁₋₂₀aliphatic group, that is, an aliphatic group with 1, 2, 3, 4, 5, 6, 7, 8, 9, 10, 11, 12, 13, 14, 15, 16, 17, 18, 19 or 20 carbon atoms. Preferably, an aliphatic group is a C₁₋₁₅aliphatic, more preferably a C₁₋₁₂aliphatic, more preferably a C₁₋₁₀aliphatic, even more preferably a C₁₋₈aliphatic, such as a C₁₋₆aliphatic group.

An alkyl group is preferably a "C₁₋₂₀ alkyl group", that is an alkyl group that is a straight or branched chain with 1 to 20 carbons. The alkyl group therefore has 1, 2, 3, 4, 5, 6, 7, 8, 9, 10, 11, 12, 13, 14, 15, 16, 17, 18, 19 or 20 carbon atoms. Preferably, an alkyl group is a C₁₋₁₅alkyl, preferably a C₁₋₁₂alkyl, more preferably a C₁₋₁₀alkyl, even more preferably a C₁₋₈alkyl, even more preferably a C₁₋₆alkyl group. Specifically, examples of "C₁₋₂₀ alkyl group" include methyl group, ethyl group, n-propyl group, iso-propyl group, n-butyl group, iso-butyl group, sec-butyl group, tert-butyl group, n-pentyl group, n-hexyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, n-heptadecyl group, n-octadecyl group, n-nonadecyl group, n-eicosyl group, 1,1-dimethylpropyl group, 1,2-dimethylpropyl group, 2,2-dimethylpropyl group, 1-ethylpropyl group, n-hexyl group, 1-ethyl-2-methylpropyl group, 1,1,2-trimethylpropyl group, 1-ethylbutyl group, 1-methylbutyl group, 2-methylbutyl group, 1,1-dimethylbutyl group, 1,2-dimethylbutyl group, 2,2-dimethylbutyl group, 1,3-dimethylbutyl group, 2,3-dimethylbutyl group, 2-ethylbutyl group, 2-methylpentyl group, 3-methylpentyl group and the like.

Alkenyl and alkynyl groups are preferably "C₂₋₂₀alkenyl" and "C₂₋₂₀alkynyl", more preferably "C₂₋₁₅alkenyl" and "C₂₋₁₅alkynyl", even more preferably "C₂₋₁₂alkenyl" and "C₂₋₁₂alkynyl", even more preferably "C₂₋₁₀alkenyl" and "C₂₋₁₀alkynyl", even more preferably "C₂₋₈alkenyl" and "C₂₋₈alkynyl", most preferably "C₂₋₆alkenyl" and "C₂₋₆alkynyl" groups, respectively.

A heteroaliphatic group is an aliphatic group as described above, which additionally contains one or more heteroatoms. Heteroaliphatic groups therefore preferably contain from 2 to 21 atoms, preferably from 2 to 16 atoms, more preferably from 2 to 13 atoms, more preferably from 2 to 11 atoms, more preferably from 2 to 9 atoms, even more preferably from 2 to 7 atoms, wherein at least one atom is a carbon atom. Particularly preferred heteroatoms are selected from O, S, N, P and Si. When heteroaliphatic groups have two or more heteroatoms, the heteroatoms may be the same or different.

An alicyclic group is a saturated or partially unsaturated cyclic aliphatic monocyclic or polycyclic (including fused, bridging and spiro-fused) ring system which has from 3 to 20 carbon atoms, that is an alicyclic group with 3, 4, 5, 6, 7, 8, 9, 10, 11, 12, 13, 14, 15, 16, 17, 18, 19 or 20 carbon atoms. Preferably, an alicyclic group has from 3 to 15, more preferably from 3 to 12, even more preferably from 3 to 10, even more preferably from 3 to 8 carbon atoms, even more preferably from 3 to 6 carbons atoms. The term "alicyclic" encompasses cycloalkyl, cycloalkenyl and cycloalkynyl groups. It will be appreciated that the alicyclic group may comprise an alicyclic ring bearing one or more linking or non-linking alkyl substituents, such as -CH₂-cyclohexyl. Specifically, examples of the C₃₋₂₀ cycloalkyl group include cyclopropyl, cyclobutyl, cyclopentyl, cyclohexyl, cycloheptyl, adamantyl and cyclooctyl.

A heteroalicyclic group is an alicyclic group as defined above which has, in addition to carbon atoms, one or more ring heteroatoms, which are preferably selected from O, S, N, P and Si. Heteroalicyclic groups preferably contain from one to four heteroatoms, which may be the same or different. Heterocyclic groups preferably contain from 5 to 20 atoms, more preferably from 5 to 14 atoms, even more preferably from 5 to 12 atoms.

An aryl group is a monocyclic or polycyclic ring system having from 5 to 20 carbon atoms. An aryl group is preferably a "C₆₋₁₂ aryl group" and is an aryl group constituted by 6, 7, 8, 9, 10, 11 or 12 carbon atoms and includes condensed ring groups such as monocyclic ring group, or bicyclic ring group and the like. Specifically, examples of "C₆₋₁₀ aryl group" include phenyl group, biphenyl group, indenyl group, naphthyl group or azulenyl group and the like. It should be noted that condensed rings such as indan and tetrahydro naphthalene are also included in the aryl group.

A heteroaryl group is an aryl group having, in addition to carbon atoms, from one to four ring heteroatoms which are preferably selected from O, S, N, P and Si. A heteroaryl group preferably has from 5 to 20, more preferably from 5 to 14 ring atoms. Specifically, examples of a heteroaryl group include pyridine, imidazole, methylimidazole and dimethylaminopyridine.

Examples of alicyclic, heteroalicyclic, aryl and heteroaryl groups include but are not limited to cyclohexyl, phenyl, acridine, benzimidazole, benzofuran, benzothiophene, benzoxazole, benzothiazole, carbazole, cinnoline, dioxin, dioxane, dioxolane, dithiane, dithiazine, dithiazole, dithiolane, furan, imidazole, imidazoline, imidazolidine, indole, indoline, indolizine, indazole, isoindole, isoquinoline, isoxazole, isothiazole, morpholine, napthyridine, oxazole, oxadiazole, oxathiazole, oxathiazolidine, oxazine, oxadiazine, phenazine, phenothiazine, phenoxazine, phthalazine, piperazine, piperidine, pteridine, purine, pyran, pyrazine, pyrazole, pyrazoline, pyrazolidine, pyridazine, pyridine, pyrimidine, pyrrole, pyrrolidine, pyrroline, quinoline, quinoxaline, quinazoline, quinolizine, tetrahydrofuran, tetrazine, tetrazole, thiophene, thiadiazine, thiadiazole, thiatriazole, thiazine, thiazole, thiomorpholine, thianaphthalene, thiopyran, triazine, triazole, and trithiane.

The term "halide" or "halogen" are used interchangeably and, as used herein mean a fluorine atom, a chlorine atom, a bromine atom, an iodine atom and the like, preferably a fluorine atom, a bromine atom or a chlorine atom, and more preferably a fluorine atom.

A haloalkyl group is preferably a "C₁₋₂₀ haloalkyl group", more preferably a "C₁₋₁₅ haloalkyl group", more preferably a "C₁₋₁₂ haloalkyl group", more preferably a "C₁₋₁₀ haloalkyl group", even more preferably a "C₁₋₈ haloalkyl group", even more preferably a "C₁₋₆ haloalkyl group" and is a C₁₋₂₀ alkyl, a C₁₋₁₅ alkyl, a C₁₋₁₂ alkyl, a C₁₋₁₀ alkyl, a C₁₋₈ alkyl, or a C₁₋₆ alkyl group, respectively, as described above substituted with at least one halogen atom, preferably 1, 2 or 3 halogen atom(s). Specifically, examples of "C₁₋₂₀ haloalkyl group" include fluoromethyl group, difluoromethyl group, trifluoromethyl group, fluoroethyl group, difluroethyl group, trifluoroethyl group, chloromethyl group, bromomethyl group, iodomethyl group and the like.

An alkoxy group is preferably a "C₁₋₂₀ alkoxy group", more preferably a "C₁₋₁₅ alkoxy group", more preferably a "C₁₋₁₂ alkoxy group", more preferably a "C₁₋₁₀ alkoxy group", even more preferably a "C₁₋₈ alkoxy group", even more preferably a "C₁₋₆ alkoxy group" and is an oxy group that is bonded to the previously defined C₁₋₂₀ alkyl, C₁₋₁₅ alkyl, C₁₋₁₂ alkyl, C₁₋₁₀ alkyl, C₁₋₈ alkyl, or C₁₋₆ alkyl group respectively. Specifically, examples of "C₁₋₂₀ alkoxy group" include methoxy group, ethoxy group, n-propoxy group, iso-propoxy group, n-butoxy group, iso-butoxy group, sec-butoxy group, tert-butoxy group, n-pentyloxy group, iso-pentyloxy group, sec-pentyloxy group, n-hexyloxy group, iso-hexyloxy group, n-hexyloxy group, n-heptyloxy group, n-octyloxy group, n-nonyloxy group, n-decyloxy group, n-undecyloxy group, n-dodecyloxy group, n-tridecyloxy group, n-tetradecyloxy group, n-pentadecyloxy group, n-hexadecyloxy group, n-heptadecyloxy group, n-octadecyloxy group, n-nonadecyloxy group, n-eicosyloxy group, 1,1-dimethylpropoxy group, 1,2-dimethylpropoxy group, 2,2-dimethylpropoxy group, 2-methylbutoxy group, 1-ethyl-2-methylpropoxy group, 1,1,2-trimethylpropoxy group, 1,1-dimethylbutoxy group, 1,2-dimethylbutoxy group, 2,2-dimethylbutoxy group, 2,3-dimethylbutoxy group, 1,3-dimethylbutoxy group, 2-ethylbutoxy group, 2-methylpentyloxy group, 3-methylpentyloxy group and the like.

An aryloxy group is preferably a "C₅₋₂₀ aryloxy group", more preferably a "C₆₋₁₂ aryloxy group", even more preferably a "C₆₋₁₀ aryloxy group" and is an oxy group that is bonded to the previously defined C₅₋₂₀ aryl, C₆₋₁₂ aryl, or C₆₋₁₀ aryl group respectively.

An alkylthio group is preferably a "C₁₋₂₀ alkylthio group", more preferably a "C₁₋₁₅ alkylthio group", more preferably a "C₁₋₁₂ alkylthio group", more preferably a "C₁₋₁₀ alkylthio group", even more preferably a "C₁₋₈ alkylthio group", even more preferably a "C₁₋₆ alkylthio group" and is a thio (-S-) group that is bonded to the previously defined C₁₋₂₀ alkyl, C₁₋₁₅ alkyl, C₁₋₁₂ alkyl, C₁₋₁₀ alkyl, C₁₋₈ alkyl, or C₁₋₆ alkyl group respectively.

An arylthio group is preferably a "C₅₋₂₀ arylthio group", more preferably a "C₆₋₁₂ arylthio group", even more preferably a "C₆₋₁₀ arylthio group" and is an thio (-S-) group that is bonded to the previously defined C₅₋₂₀ aryl, C₆₋₁₂ aryl, or C₆₋₁₀ aryl group respectively.

An alkylaryl group is preferably a "C₆₋₁₂ aryl C₁₋₂₀ alkyl group", more preferably a preferably a "C₆₋₁₂ aryl C₁₋₁₆ alkyl group", even more preferably a "C₆₋₁₂ aryl C₁₋₆ alkyl group" and is an aryl group as defined above bonded at any position to an alkyl group as defined above. The point of attachment of the alkylaryl group to a molecule may be via the alkyl portion and thus, preferably, the alkylaryl group is -CH₂-Ph or -CH₂CH₂-Ph. An alkylaryl group can also be referred to as "aralkyl".

A silyl group is preferably a group -Si(Rₛ)₃, wherein each Rₛ can be independently an hydrogen, aliphatic, heteroaliphatic, alicyclic, heteroalicyclic, aryl or heteroaryl group as defined above. In certain embodiments, each Rₛ is independently hydrogen, or an unsubstituted aliphatic, alicyclic or aryl. Preferably, each Rₛ is independently selected from hydrogen or an alkyl group selected from methyl, ethyl or propyl.

A silyl ether group is preferably a group OSi(R₆)₃ wherein each R₆ can be independently hydrogen or an aliphatic, heteroaliphatic, alicyclic, heteroalicyclic, aryl or heteroaryl group as defined above. In certain embodiments, each R₆ can be independently a hydrogen or unsubstituted aliphatic, alicyclic or aryl. Preferably, each R₆ is hydrogen or an alkyl group selected from methyl, ethyl or propyl.

A nitrile group (also referred to as a cyano group) is a group CN.

An imine group is a group -CRNR, preferably a group -CHNR₇ wherein R₇ is an aliphatic, heteroaliphatic, alicyclic, heteroalicyclic, aryl or heteroaryl group as defined above. In certain embodiments, R₇ is unsubstituted aliphatic, alicyclic or aryl. Preferably R₇ is an alkyl group selected from methyl, ethyl or propyl.

An acetylide group contains a triple bond -C=C-Rg, preferably wherein Rg can be an aliphatic, heteroaliphatic, alicyclic, heteroalicyclic, aryl or heteroaryl group as defined above. For the purposes of the invention when Rg is alkyl, the triple bond can be present at any position along the alkyl chain. In certain embodiments, Rg is unsubstituted aliphatic, alicyclic or aryl. Preferably Rg is methyl, ethyl, propyl or phenyl.

An amino group is preferably -NH₂, -NHR₁₀ or -N(R₁₀)₂ wherein R₁₀ can be an aliphatic, heteroaliphatic, alicyclic, heteroalicyclic, a silyl group, aryl or heteroaryl group as defined above. It will be appreciated that when the amino group is N(R₁₀)₂, each R₁₀ group can be the same or different. In certain embodiments, each R₁₀ is independently an unsubstituted aliphatic, alicyclic, silyl or aryl. Preferably R₁₀ is methyl, ethyl, propyl, SiMe₃ or phenyl.

An amido group is preferably -NR₁₁C(O)- or -C(O)-NR₁₁-wherein R₁₁ can be hydrogen, an aliphatic, heteroaliphatic, alicyclic, heteroalicyclic, aryl or heteroaryl group as defined above. In certain embodiments, R₁₁ is unsubstituted aliphatic, alicyclic or aryl. Preferably R₁₁ is hydrogen, methyl, ethyl, propyl or phenyl. The amido group may be terminated by hydrogen, an aliphatic, heteroaliphatic, alicyclic, heteroalicyclic, aryl or heteroaryl group.

An ester group is preferably -OC(O)R₁₂- or -C(O)OR₁₂- wherein R₁₂ can be hydrogen, an aliphatic, heteroaliphatic, alicyclic, heteroalicyclic, aryl or heteroaryl group as defined above. In certain embodiments, R₁₂ is unsubstituted aliphatic, alicyclic or aryl. Preferably R₁₂ is hydrogen, methyl, ethyl, propyl or phenyl. The ester group may be terminated by hydrogen, an aliphatic, heteroaliphatic, alicyclic, heteroalicyclic, aryl or heteroaryl group.

A sulfoxide is preferably -S(O)R₁₃ and a sulfonyl group is preferably -OS(O)₂R₁₃ wherein R₁₃ can be hydrogen, an aliphatic, heteroaliphatic, alicyclic, heteroalicyclic, aryl or heteroaryl group as defined above. In certain embodiments, R₁₃ is unsubstituted aliphatic, alicyclic or aryl. Preferably R₁₃ is hydrogen, methyl, ethyl, propyl or phenyl.

A carboxylate group is preferably -OC(O)R₁₄, wherein R₁₄ can be hydrogen, an aliphatic, heteroaliphatic, alicyclic, heteroalicyclic, aryl or heteroaryl group as defined above. In certain embodiments, R₁₄ is unsubstituted aliphatic, alicyclic or aryl. Preferably R₁₄ is hydrogen, methyl, ethyl, propyl, butyl (for example n-butyl, isobutyl or tert-butyl), phenyl, pentafluorophenyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, trifluoromethyl or adamantyl.

An acetamide is preferably MeC(O)N(R₁₅)₂ wherein R₁₅ can be hydrogen, an aliphatic, heteroaliphatic, alicyclic, heteroalicyclic, aryl or heteroaryl group as defined above. In certain embodiments, R₁₅ is unsubstituted aliphatic, alicyclic or aryl. Preferably R₁₅ is hydrogen, methyl, ethyl, propyl or phenyl.

A phosphinate group is preferably a group -OP(O)(R₁₆)₂ or -P(O)(OR₁₆) wherein each R₁₆ is independently selected from hydrogen, or an aliphatic, heteroaliphatic, alicyclic, heteroalicyclic, aryl or heteroaryl group as defined above. In certain embodiments, R₁₆ is aliphatic, alicyclic or aryl, which are optionally substituted by aliphatic, alicyclic, aryl or C₁₋₆alkoxy. Preferably R₁₆ is optionally substituted aryl or C₁₋₂₀ alkyl, more preferably phenyl optionally substituted by C₁₋₆alkoxy (preferably methoxy) or unsubstituted C₁₋₂₀alkyl (such as hexyl, octyl, decyl, dodecyl, tetradecyl, hexadecyl, stearyl).

A sulfinate group is preferably -OSOR₁₇ wherein R₁₇ can be hydrogen, an aliphatic, heteroaliphatic, haloaliphatic, alicyclic, heteroalicyclic, aryl or heteroaryl group as defined above. In certain embodiments, R₁₇ is unsubstituted aliphatic, alicyclic or aryl. Preferably R₁₇ is hydrogen, methyl, ethyl, propyl or phenyl.

A carbonate group is preferably OC(O)OR₁₈, wherein R₁₈ can be hydrogen, an aliphatic, heteroaliphatic, alicyclic, heteroalicyclic, aryl or heteroaryl group as defined above. In certain embodiments, R₁₈ is optionally substituted aliphatic, alicyclic or aryl. Preferably R₁₈ is hydrogen, methyl, ethyl, propyl, butyl (for example n-butyl, isobutyl or tert-butyl), phenyl, pentafluorophenyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, trifluoromethyl, cyclohexyl, benzyl or adamantyl.

It will be appreciated that where any of the above groups are present in a Lewis base G, one or more additional R groups may be present, as appropriate, to complete the valency. For example, in the context of an amino group, an additional R group may be present to give RNHR₁₀., wherein R is hydrogen, an optionally substituted aliphatic, heteroaliphatic, alicyclic, heteroalicyclic, aryl or heteroaryl group as defined above. Preferably, R is hydrogen or aliphatic, alicyclic or aryl.

Any of the aliphatic, heteroaliphatic, alicyclic, heteroalicyclic, aryl, heteroaryl, haloalkyl, alkoxy, aryloxy, alkylthio, arylthio, alkylaryl, silyl, silyl ether, ester, sulfoxide, sulfonyl, carboxylate, carbonate, imine, acetylide, amino, phosphinate, sulfonate or amido groups wherever mentioned in the definitions above, may optionally be substituted by halogen, hydroxy, nitro, carboxylate, carbonate, alkoxy, aryloxy, alkylthio, arylthio, heteroaryloxy, alkylaryl, amino, amido, imine, nitrile, silyl, silyl ether, ester, sulfoxide, sulfonyl, acetylide, phosphinate, sulfonate or optionally substituted aliphatic, heteroaliphatic, alicyclic, heteroalicyclic, aryl or heteroaryl groups (for example, optionally substituted by halogen, hydroxy, nitro, carbonate, alkoxy, aryloxy, alkylthio, arylthio, amino, imine, nitrile, silyl, sulfoxide, sulfonyl, phosphinate, sulfonate or acetylide).

It will be appreciated that although in formula (I), the groups X and G are illustrated as being associated with a single M₁ or M₂ metal centre, one or more X and/or G groups may form a bridge between the M₁ and M₂ metal centres.

For the purposes of the present invention, the epoxide substrate is not limited. The term epoxide therefore relates to any compound comprising an epoxide moiety. Preferred examples of epoxides for the purposes of the present invention include cyclohexene oxide, styrene oxide, propylene oxide, substituted cyclohexene oxides (such as limonene oxide, C₁₀H₁₆O or 2-(3,4-epoxycyclohexyl)ethyltrimethoxysilane, C₁₁H₂₂O), alkylene oxides (such as ethylene oxide and substituted ethylene oxides) or unsubstituted or substituted oxiranes (such as epichlorohydrin, 1,2-epoxybutane, glycidyl ethers), 2-(2-methoxyethoxy)methyl oxirane (MEMO), 2-(2-(2-methoxyethoxy)ethoxy)methyl oxirane (ME2MO), 2-(2-(2-(2-methoxyethoxy)ethoxy)ethoxy)methyl oxirane (ME3MO), 1,2-epoxybutane, glycidyl ethers), vinyl-cyclohexene oxide, 3-phenyl-1,2-epoxypropane, 1,2- and 2,3-epoxybutane, isobutylene oxide, cyclopentene oxide, 2,3-epoxy-1,2,3,4-tetrahydronaphthalene, indene oxide, and functionalized 3,5-dioxaepoxides. Examples of functionalized 3,5-dioxaepoxides include:

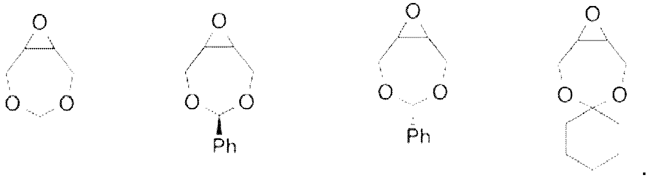

The epoxide moiety may be a glycidyl ether or glycidyl carbonate. Examples of glycidyl ethers and glycidyl carbonates include:

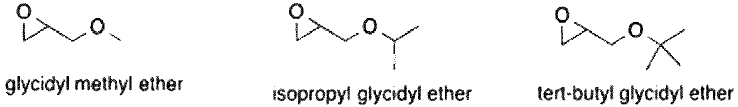

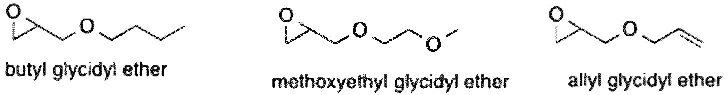

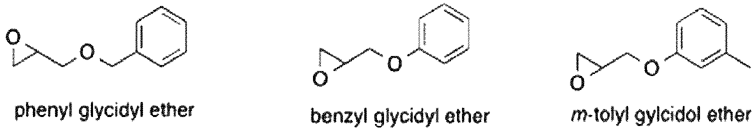

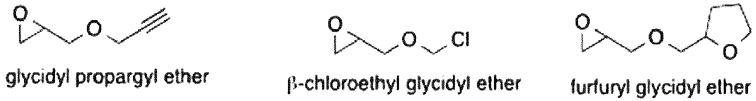

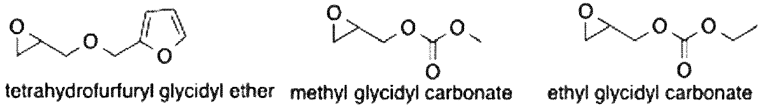

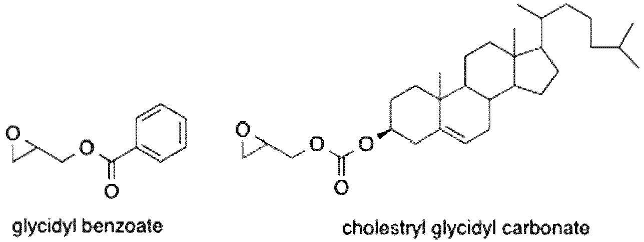

The epoxide substrate may contain more than one epoxide moiety, i.e. it may be a bis-epoxide, a tris-epoxide, or a multi-epoxide containing moiety. Examples of compounds including more than one epoxide moiety include bisphenol A diglycidyl ether and 3,4-epoxycyclohexylmethyl 3,4-epoxycyclohexanecarboxylate. It will be understood that reactions carried out in the presence of one or more compounds having more than one epoxide moiety may lead to cross-linking in the resulting polymer.

The skilled person will appreciate that the epoxide can be obtained from "green" or renewable resources. The epoxide may be obtained from a (poly)unsaturated compound, such as those deriving from a fatty acid and/or terpene, obtained using standard oxidation chemistries.

The epoxide moiety may contain -OH moieties, or protected -OH moieties. The -OH moieties may be protected by any suitable protecting group. Suitable protecting groups include methyl or other alkyl groups, benzyl, allyl, tert-butyl, tetrahydropyranyl (THP), methoxymethyl (MOM), acetyl (C(O)alkyl), benzolyl (C(O)Ph), dimethoxytrityl (DMT), methoxyethoxymethyl (MEM), p-methoxybenzyl (PMB), trityl, silyl (such as trimethylsilyl (TMS), *t*-Butyldimethylsilyl (TBDMS), *t*-Butyldiphenylsilyl (TBDPS), tri-*iso-*propylsilyloxymethyl (TOM), and triisopropylsilyl (TIPS)), (4-methoxyphenyl)diphenylmethyl (MMT), tetrahydrofuranyl (THF), and tetrahydropyranyl (THP).

Preferably the epoxide is selected from propylene oxide, cyclohexene oxide and styrene oxide.

The epoxide preferably has a purity of at least 98%, more preferably >99%.

It will be understood that the term "an epoxide" is intended to encompass one or more epoxides. In other words, the term "an epoxide" refers to a single epoxide, or a mixture of two or more different epoxides. For example, the epoxide substrate may be a mixture of ethylene oxide and propylene oxide, a mixture of cyclohexene oxide and propylene oxide, a mixture of ethylene oxide and cyclohexene oxide, or a mixture of ethylene oxide, propylene oxide and cyclohexene oxide.

The skilled person will also understand that substituted and unsubstituted oxetanes can be used in place of, and in addition to, the epoxides of the second aspect of the invention. Suitable oxetanes include unsubstituted or substituted oxetanes (preferably substituted at the 3-position by halogen, alkyl (unsubstituted or substituted by -OH or halogen), amino, hydroxyl, aryl (e.g. phenyl), alkylaryl (e.g. benzyl)). Exemplary oxetanes include oxetane, 3-ethyl-3-oxetanemethanol, oxetane-3-methanol, 3-methyl-3-oxetanemethanol, 3-methyloxetane, 3-ethyloxetane, etc.

The term anhydride relates to any compound comprising an anhydride moiety in a ring system (i.e. a cyclic anhydride). Preferably, the anhydrides which are useful in the present invention have the following formula: 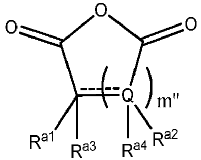 Wherein m" is 1, 2, 3, 4, 5, or 6 (preferably 1 or 2), each R^{a1}, R^{a2}, R^{a3} and R^{a4} is independently selected from hydrogen, halogen, hydroxyl, nitro, alkoxy, aryloxy, heteroaryloxy, amino, alkylamino, imine, nitrile, acetylide, carboxylate or optionally substituted aliphatic, heteroaliphatic, alicyclic, heteroalicyclic, aryl, heteroaryl, alkylaryl or alkylheteroaryl; or two or more of R^{a1}, R^{a2}, R^{a3} and R^{a4} can be taken together to form a saturated, partially saturated or unsaturated 3 to 12 membered, optionally substituted ring system, optionally containing one or more heteroatoms, or can be taken together to form a double bond. Each Q is independently C, O, N or S, preferably C, wherein R^{a3} and R^{a4} are either present, or absent, and ------ can either be = or -, according to the valency of Q. It will be appreciated that when Q is C, and ------ is =, R^{a3} and R^{a4} (or two R^{a4} on adjacent carbon atoms) are absent. Preferable anhydrides are set out below.

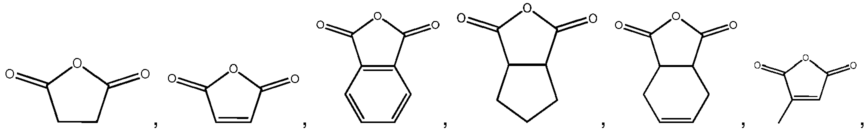

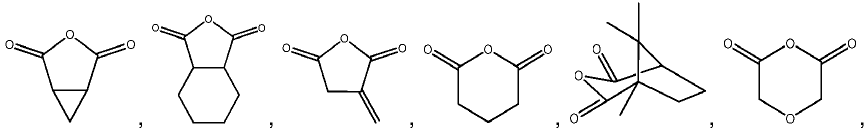

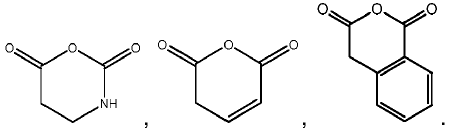

The term lactone relates to any cyclic compound comprising a-C(O)O- moiety in the ring. Preferably, the lactones which are useful in the present invention have the following formula:

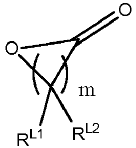

Wherein m is 1 to 20 (e.g. 1, 2, 3, 4, 5, 6, 7, 8, 9, 10, 11, 12, 13, 14, 15, 16, 17, 18, 19 or 20), preferably 2, 4, or 5; and R^{L1} and R^{L2} are independently selected from hydrogen, halogen, hydroxyl, nitro, alkoxy, aryloxy, heteroaryloxy, amino, alkylamino, imine, nitrile, acetylide, carboxylate or optionally substituted aliphatic, heteroaliphatic, alicyclic, heteroalicyclic, aryl, heteroaryl, alkylaryl or alkylheteroaryl. Two or more of R^{L1} and R^{L2} can be taken together to form a saturated, partially saturated or unsaturated 3 to 12 membered, optionally substituted ring system, optionally containing one or more heteroatoms. When m is 2 or more, the R^{L1} and R^{L2} on each carbon atom may be the same or different. Preferably R^{L1} and R^{L2} are selected from hydrogen or alkyl. Preferably, the lactone has the following structure:

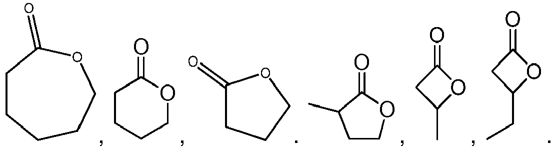

The term lactide is a cyclic compound containing two ester groups. Preferably, the lactides which are useful in the present invention have the following formula:

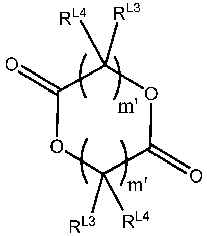

Wherein m' is 1, 2, 3, 4, 5, 6, 7, 8, 9 or 10, (preferably 1 or 2, more preferably, 1) and R^{L3} and R^{L4} are independently selected from hydrogen, halogen, hydroxyl, nitro, alkoxy, aryloxy, heteroaryloxy, amino, alkylamino, imine, nitrile, acetylide, carboxylate or optionally substituted aliphatic, heteroaliphatic, alicyclic, heteroalicyclic, aryl, heteroaryl, alkylaryl or alkylheteroaryl. Two or more of R^{L3} and R^{L4} can be taken together to form a saturated, partially saturated or unsaturated 3 to 12 membered, optionally substituted ring system, optionally containing one or more heteroatoms, When m' is 2 or more, the R^{L3} and R^{L4} on each carbon atom may be the same or different or one or more R^{L3} and R^{L4} on adjacent carbon atoms can be absent, thereby forming a double or triple bond. It will be appreciated that while the compound has two moieties represented by (-CR^{L3}R^{L4})_{m'}, both moieties will be identical. Preferably, m' is 1, R^{L4} is H, and R^{L3} is H, hydroxyl or a C₁₋₆alkyl, preferably methyl. The stereochemistry of the moiety represented by (-CR^{L3}R^{L4})_{m'} can either be the same (for example RR-lactide or SS-lactide), or different (for example, *meso-*lactide). The lactide may be a racemic mixture, or may be an optically pure isomer. Preferably, the lactide has the following formula:

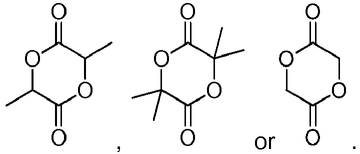

The term "lactone and/or lactide" used herein encompasses a lactone, a lactide and a combination of a lactone and a lactide. Preferably, the term "lactone and/or lactide" means a lactone or a lactide.

Preferred optional substituents of the groups R^{a1}, R^{a2}, R^{a3}, R^{a4}, R^{L1}, R^{L2}, R^{L3} and R^{L4} include halogen, nitro, hydroxyl, unsubstituted aliphatic, unsubstituted heteroaliphatic unsubstituted aryl, unsubstituted heteroaryl, alkoxy, aryloxy, heteroaryloxy, amino, alkylamino, imine, nitrile, acetylide, and carboxylate.

### Detailed Description

In the first aspect of the invention, there is provided a catalyst of formula (I): 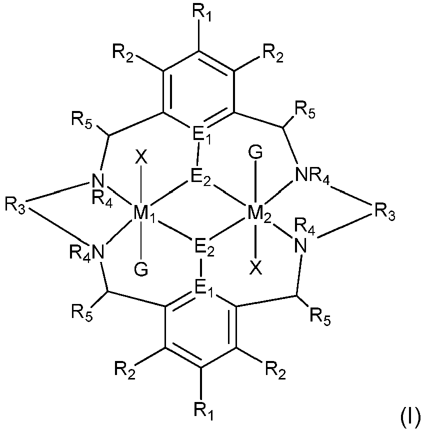 wherein:
M₁ is Zn and M₂ is Mg;
R₁ and R₂ are independently selected from hydrogen, halide, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
R₃ is independently selected form optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
R₄ is independently selected from H, or optionally substituted aliphatic, heteroaliphatic, alicyclic, heteroalicyclic, aryl, heteroaryl, alkylheteroaryl or alkylaryl;
R₅ is H, or optionally substituted aliphatic, heteroaliphatic, alicyclic, heteroalicyclic, aryl, heteroaryl, alkylheteroaryl or alkylaryl;
E₁ is C, E₂ is O;
X is independently selected from OC(O)R^{x}, OSO₂R^{x}, OSOR^{x}, OSO(R^{x})₂, S(O)R^{x}, OR^{x}, phosphinate, halide, nitrate, hydroxyl, carbonate, amino, amido or optionally substituted aliphatic, heteroaliphatic, alicyclic, heteroalicyclic, aryl or heteroaryl;
Rₓ is independently hydrogen, or optionally substituted aliphatic, haloaliphatic, heteroaliphatic, alicyclic, heteroalicyclic, aryl, alkylaryl or heteroaryl; and
G is absent or independently selected from a neutral or anionic donor ligand which is a Lewis base.

The skilled person will understand that when M₁ is Zn and M₂ is Mg, the metal(s) will be in the +2 oxidation state, i.e. Mg is Mg(II) and Zn is Zn(II).

Each occurrence of the groups R₁ and R₂ may be the same or different. Preferably R₁ and R₂ are independently selected from hydrogen, halide, amino, nitro, sulfoxide, silyl, sulfonyl, sulfinate, and an optionally substituted alkyl, alkenyl, aryl, heteroaryl, alkoxy, aryloxy or alkylthio. Preferably R₂ is hydrogen.

Even more preferably, each R₂ is hydrogen and R₁ is independently selected from hydrogen, halide, amino, nitro, sulfoxide, silyl, sulfonyl, sulfinate and optionally substituted alkyl, alkenyl, aryl, heteroaryl, alkoxy, aryloxy, alkylthio, arylthio, such as hydrogen, C₁₋₆alkyl (e.g. haloalkyl), alkoxy, aryl, halide, nitro, silyl, sulfonyl and alkylthio, for example, ^{t}Bu, iPr, Me, OMe, H, nitro, halogen, SiH₂Me, SiEt₃, SO₂Me or phenyl. Preferably each occurrence of R₂ is the same, and each occurrence of R₁ is the same, and R₁ and R₂ can be the same or different.

It will be appreciated that the group R₃ is a disubstituted alkyl, alkenyl, alkynyl, heteroalkyl, heteroalkenyl or heteroalkynyl group which may optionally be interrupted by an aryl, heteroaryl, alicyclic or heteroalicyclic group, or may be a disubstituted aryl or cycloalkyl group which acts as a bridging group between two nitrogen centres in the catalyst of formula (I). Thus, where R₃ is a alkylene group, such as dimethylpropylene, the R₃ group has the structure -CH₂-C(CH₃)₂-CH₂-. The definitions of the alkyl, aryl, cycloalkyl etc groups set out above therefore also relate respectively to the alkylene, arylene, cycloalkylene etc groups set out for R₃ and R₃ may be optionally substituted. Exemplary options for R₃ include ethylene, 2,2-dimethylpropylene, propylene, butylene, phenylene, cyclohexylene or biphenylene, more preferably 2,2-dimethylpropylene. When R₃ is cyclohexylene, it can be the racemic, RR- or SS- forms. Preferably R₃ is a substituted propylene, such as 2,2-di(alkyl)propylene.

Preferably each R₄ is independently selected from hydrogen, and an optionally substituted alkyl, alkenyl, alkynyl, aryl, heteroalkyl, heteroalkenyl, heteroalkynyl or heteroaryl. Exemplary options for R₄ include H, Me, Et, Bn, iPr, tBu or Ph. A further exemplary option is -CH₂-(pyridine). In particularly preferred embodiments, each R₄ is hydrogen.

Preferably each R₅ is independently selected from hydrogen, and optionally substituted aliphatic or aryl. More preferably, R₅ is selected from hydrogen, and optionally substituted alkyl or aryl. Exemplary R₅ groups include hydrogen, methyl, ethyl, phenyl and trifluoromethyl, preferably hydrogen, methyl or trifluoromethyl. In particularly preferred embodiments, each R₅ is hydrogen.

Each X is independently selected from OC(O)R^{x}, OSO₂R^{x}, OS(O)R^{x}, OSO(R^{x})₂, S(O)R^{x}, OR^{x}, phosphinate, halide, nitro, hydroxyl, carbonate, amino, amido and optionally substituted aliphatic, heteroaliphatic (for example silyl), alicyclic, heteroalicyclic, aryl or heteroaryl. Preferably each X is independently OC(O)R^{x}, OSO₂R^{x}, OS(O)R^{x}, OSO(R^{x})₂, S(O)R^{x}, OR^{x}, halide, nitrate, hydroxyl, carbonate, amino, nitro, amido, alkyl (e.g. branched alkyl), heteroalkyl, (for example silyl), aryl or heteroaryl. In particularly preferred embodiments, each X is independently OC(O)R^{x}, OR^{x}, halide, carbonate, amino, nitro, alkyl, aryl, heteroaryl, phosphinate or OSO₂R^{x}. Preferred optional substituents for when X is aliphatic, heteroaliphatic, alicyclic, heteroalicyclic, aryl or heteroaryl include halogen, hydroxyl, nitro, cyano, amino, or substituted or unsubstituted aliphatic, heteroaliphatic, alicyclic, heteroalicyclic, aryl or heteroaryl. Each X may be the same or different and preferably each X is the same.

R^{x} is independently hydrogen, or optionally substituted aliphatic, haloaliphatic, heteroaliphatic, alicyclic, heteroalicyclic, aryl, alkylaryl or heteroaryl. Preferably, R^{x} is optionally substituted alkyl, alkenyl, alkynyl, heteroalkyl, aryl, heteroaryl or alkylaryl. Preferred optional substitutents for R^{x} include halogen, hydroxyl, cyano, nitro, amino, alkoxy, alkylthio, or substituted or unsubstituted aliphatic, heteroaliphatic, alicyclic, heteroalicyclic, aryl or heteroaryl (e.g. optionally substituted alkyl, aryl, or heteroaryl).

Exemplary options for X include OAc, OCOEt, OC(O)CF₃, halogen, OSO(CH₃)₂, Et, Me, OMe, OiPr, OtBu, Cl, Br, I, F, N(iPr)₂ or N(SiMe₃)₂, OPh, OBn, salicylate, diphenyl phosphinate, bis-(4-methoxy)phenyl phosphinate, dioctyl phosphinate, OCOBn, OCOCH₂C₆F₅, OCO(CH₂)₅CH₃, OCO(CH₂)₇CH₃, OCO(CH₂)₉CH₃, O(CH₂)₅CH₃, O(CH₂)₇CH₃, O(CH₂)₉CH₅, etc.

When G is not absent, it is a group which is capable of donating a lone pair of electrons (i.e. a Lewis base). In certain embodiments, G is a nitrogen-containing Lewis base. Each G may be neutral or negatively charged. If G is negatively charged, then one or more positive counterions will be required to balance out the charge of the complex. Suitable positive counterions include group 1 metal ions (Na⁺, K⁺, etc), group 2 metal ions (Mg²⁺, Ca²⁺, etc), imidazolium ions, a positively charged optionally substituted heteroaryl, heteroaliphatic or heteroalicyclic group, ammonium ions (i.e. N(R¹²)₄⁺), iminium ions (i.e. (R¹²)₂C=N(R¹²)₂⁺, such as bis(triphenylphosphine)iminium ions) or phosphonium ions (P(R¹²)₄⁺), wherein each R¹² is independently selected from hydrogen or optionally substituted aliphatic, heteroaliphatic, alicyclic, heteroalicyclic, aryl or heteroaryl. Exemplary counterions include [H-B]⁺ wherein B is selected from triethylamine, 1,8-diazabicyclo[5.4.0]undec-7-ene and 7-methyl-1,5,7-triazabicyclo[4.4.0]dec-5-ene.

G is preferably independently selected from an optionally substituted heteroaliphatic group, an optionally substituted heteroalicyclic group, an optionally substituted heteroaryl group, a halide, hydroxide, hydride, a carboxylate and water. More preferably, G is independently selected from water, an alcohol, a substituted or unsubstituted heteroaryl (imidazole, methyl imidazole (for example, N-methyl imidazole), pyridine, 4-dimethylaminopyridine, pyrrole, pyrazole, etc), an ether (dimethyl ether, diethylether, cyclic ethers, etc), a thioether, carbene, a phosphine, a phosphine oxide, a substituted or unsubstituted heteroalicyclic (morpholine, piperidine, tetrahydrofuran, tetrahydrothiophene, etc), an amine, an alkyl amine trimethylamine, triethylamine, etc), acetonitrile, an ester (ethyl acetate, etc), an acetamide (dimethylacetamide, etc), a sulfoxide (dimethylsulfoxide, etc), a carboxylate, a hydroxide, hydride, a halide, a nitrate, a sulfonate, etc. In some embodiments, one or both instances of G is independently selected from optionally substituted heteroaryl, optionally substituted heteroaliphatic, optionally substituted heteroalicyclic, halide, hydroxide, hydride, an ether, a thioether, carbene, a phosphine, a phosphine oxide, an amine, an alkyl amine, acetonitrile, an ester, an acetamide, a sulfoxide, a carboxylate, a nitrate or a sulfonate. In certain embodiments, G may be a halide; hydroxide; hydride; water; a heteroaryl, heteroalicyclic or carboxylate group which are optionally substituted by alkyl, alkenyl, alkynyl, alkoxy, halogen, hydroxyl, nitro or nitrile. In preferred embodiments, G is independently selected from halide; water; a heteroaryl optionally substituted by alkyl (e.g. methyl, ethyl etc), alkenyl, alkynyl, alkoxy (preferably methoxy), halogen, hydroxyl, nitro or nitrile. In some embodiments, one or both instances of G is negatively charged (for example, halide). In further embodiments, one or both instances of G is an optionally substituted heteroaryl. Exemplary G groups include chloride, bromide, pyridine, methylimidazole (for example N-methyl imidazole) and dimethylaminopyridine (for example, 4-methylaminopyridine).

It will be appreciated that when a G group is present, the G group may be associated with a single M metal centre as shown in formula (I), or the G group may be associated with both metal centres and form a bridge between the two metal centres, as shown below in formula (Ia): 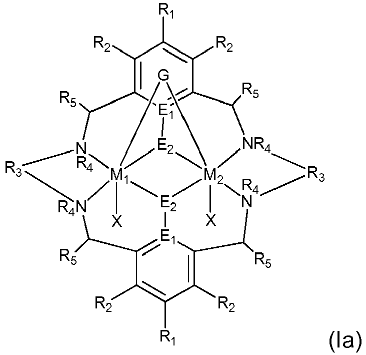 Wherein R₁, R₂, R₃, R₄, R₅, M, G, X, E₁ and E₂ are as defined for formula (I).

It will be appreciated that the preferred features described above for the catalyst of the first aspect may be present in combination *mutatis mutandis.*

For example, in preferred embodiments of the first aspect, each occurrence of R₂, R₄ and R₅ are H, and R₃ is an optionally substituted propylene, phenylene or cyclohexylene.

Preferably, each occurrence of R₂, R₄ and R₅ are H, R₃ is an optionally substituted propylene, phenylene or cyclohexylene, each X is independently OC(O)R^{x}, OR^{x}, halide, carbonate, amino, nitro, alkyl, aryl, heteroaryl, phosphinate or OSO₂R^{x}, each R₁ is independently hydrogen, alkyl, alkenyl, aryl, heteroaryl, alkoxy, alkylthio, halide, amino, nitro, sulfoxide, sulfonyl, sulfinate or silyl, and each G (where present) is independently selected from halide; water; a heteroaryl optionally substituted by alkyl (e.g. methyl, ethyl etc), alkenyl, alkynyl, alkoxy (preferably methoxy), halogen, hydroxyl, nitro or nitrile.

Exemplary catalysts of the first aspect are as follows: 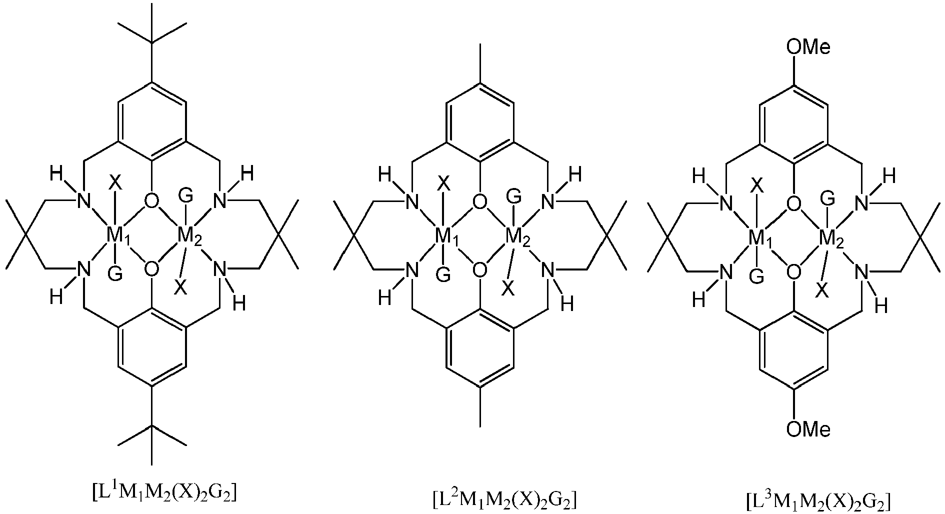 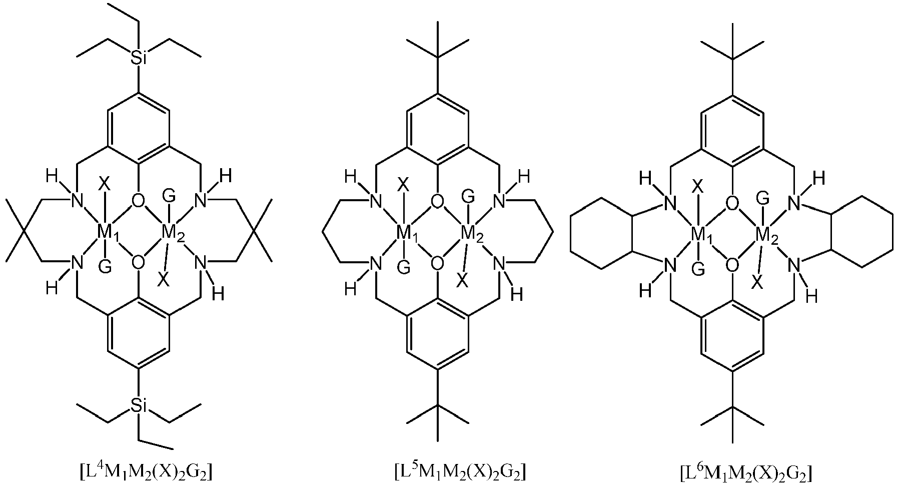 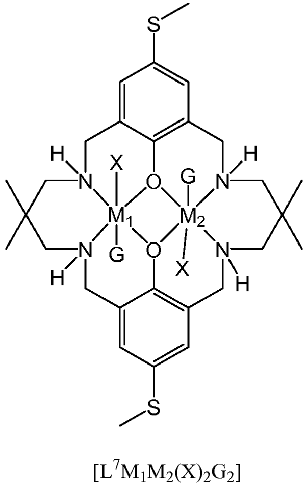 wherein either occurrence of G is either absent or present, and preferably wherein X is independently OC(O)R^{x}, OR^{x}, halide, carbonate, amino, nitro, alkyl, aryl, heteroaryl, phosphinate or OSO₂R^{x}, even more preferably X is OAc.

In a second aspect of the invention, there is provided a catalyst system comprising a catalyst according to the first aspect.

The catalyst system of the second aspect may comprise one or more second catalysts which are capable of catalysing the reaction between (i) carbon dioxide and an epoxide, (ii) an epoxide and an anhydride or (iii) a lactide and/or a lactone, depending on the nature of the reaction to be carried out. Suitable second catalysts include the catalysts of formula (I) as described in WO 2009/130470 and the catalysts of formulae (I) or (III) as described in WO 2013/034750. In other words, the second catalyst may be one or more of a catalyst of formula (Ic): 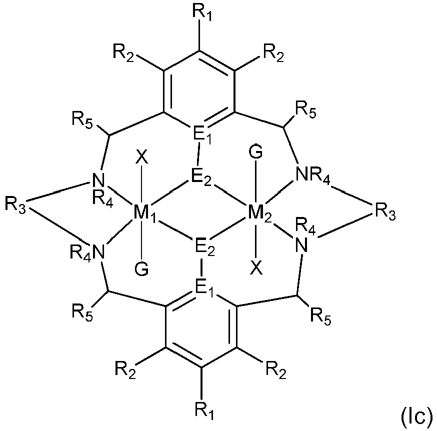 wherein R₁ to R₅, E₁, E₂, G and X are as described above for the first aspect, and wherein M₁ is Zn (II) and M₂ is Mg (II), or wherein the second catalyst is selected from [L¹Mg₂(OAc)₂] and [L¹Zn₂(OAc)₂],

The skilled person will understand that the preferred options for each of R₁ to R₅, G and X as described for the first aspect apply equally to the second catalysts of formula (Ic), and that the preferred features described above for each of R₁ to R₅, G and X for the first aspect may be present in combination *mutatis mutandis* for the second catalysts. For the second catalysts, X is preferably a carboxylate such as acetate, benzoate and trifluoroacetate, or halide. For the second catalysts M₁ and M₂ are preferably selected from Mg(II) and Zn(II).

The catalyst system of the second aspect may comprise a co-catalyst. Suitable cocatalysts include salts such as ammonium salts and phosphonium salts, or Lewis bases, such as dimethylaminopyridine (DMAP), methyl imidazole and pyridine.

The catalyst system may comprise at least about 0.5% by weight, for example, from about 0.5 % by weight to about 99.5 % by weight of the catalyst according to the first aspect. Preferably the catalyst system comprises at least about 5% by weight, such as at least about 10% by weight, more preferably at least about 30% by weight, even more preferably at least about 50% by weight and even more preferably at least about 75% by weight, e.g. at least about 95% by weight of the catalyst according to the first aspect.

The second catalyst(s) may be present in an amount of from about 0.5 % by weight to about 99.5 % by weight of the catalyst system. For example, the second catalyst may be present in an amount of from about 1 % by weight to about 70% by weight, such as about 5% by weight to about 50% by weight, e.g. about 10% by weight to about 30% by weight, for example about 15% by weight to about 25% by weight of the catalyst system.

When the co-catalyst is present, in may be present in the catalyst system in a molar ratio of from about 1:1 to about 1:100, co-catalyst:total catalyst content (i.e. sum of the catalyst of the first aspect and the second catalyst).

The catalysts of the first aspect and the catalyst system of the second aspect are capable of polymerising (i) carbon dioxide and an epoxide, (ii) an epoxide and an anhydride, and (iii) a lactide and/or a lactone. Therefore, in a third aspect of the invention there is provided a process for the reaction of carbon dioxide with an epoxide, an anhydride with an epoxide, or a lactide and/or a lactone in the presence of a catalyst according to the first aspect or a catalyst system according to the second aspect.

The process of the third aspect may be carried out in the presence of a chain transfer agent. Suitable chain transfer agents include the chain transfer agents, for example as defined by formula (II), in WO 2013/034750. For example, the chain transfer agent may be water, or may comprise at least one amine (-NHR), alcohol (-OH) or thiol (-SH) moiety, wherein R is selected from hydrogen, or optionally substituted aliphatic, heteroaliphatic, alicyclic, heteroalicyclic, aryl or heteroaryl, for example, selected from hydrogen, or optionally substituted alkyl, heteroalkyl, alkenyl, heteroalkenyl, cycloalkyl, heterocycloalkyl, aryl, or heteroaryl.

The process of the third aspect may be carried out in the presence of a solvent. Examples of solvents useful in the third aspect include toluene, diethyl carbonate, dimethyl carbonate, dioxane, dichlorobenzene, methylene chloride, propylene carbonate, ethylene carbonate, etc.

When the process of the third aspect involves the reaction of an epoxide, the epoxide may be any compound comprising an epoxide moiety. The epoxide may be purified (for example by distillation, such as over calcium hydride) prior to reaction with carbon dioxide or the anhydride. For example, the epoxide may be distilled prior to being added to the reaction mixture comprising the catalyst or catalyst system.

The process of the third aspect of the invention may be carried out at a pressure of 1 to 100 atmospheres, preferably at 1 to 40 atmospheres, such as at 1 to 10 atmospheres, more preferably at 1 or 2 atmospheres. The catalysts and catalyst systems used in the process of the third aspect allow the reaction to be carried out at low pressures.

The catalysts of the first aspect or the catalyst systems of the second aspect may operate at temperatures of up to 250°C. The process of the third aspect of the invention may be carried out at a temperature of about 0°C to about 250°C, such as from about 0°C to about 120°C, preferably from about 50°C to about 100°C. The duration of the process may be up to 168 hours, such as from about 1 minute to about 24 hours, for example from about 5 minutes to about 12 hours, e.g. from about 1 to about 6 hours.

The process of the third aspect of the invention may be carried out at low catalytic loading. For example, when the reaction involves copolymerisation of carbon dioxide and an epoxide, the catalytic loading for the process is preferably in the range of 1:1,000-100,000 catalyst:epoxide, more preferably in the region of 1:1,000-50,000 catalyst:epoxide, even more preferably in the region of 1:1,1000-10,000, and most preferably in the region of 1:10,000 catalyst:epoxide. When the process involves copolymerisation of an epoxide and an anhydride, or the reaction of a lactide and/or lactone, the catalytic loading for the process is preferably in the range of 1:1,000-100,000 catalyst: total monomer content, more preferably in the region of 1:1,000-50,000 catalyst: total monomer content, even more preferably in the region of 1:1,1000-10,000, and most preferably in the region of 1:10,000 catalyst:total monomer content. The ratios above are molar ratios.

It will be appreciated that the various features described above for the process of the third aspect may be present in combination *mutatis mutandis.* All preferred features of the first and second aspects apply equally to the third aspect and may be present in combination *mutatis mutandis.*

Also described is a product of the process of the third aspect of the invention.

The fourth aspect of the invention provides a method for the synthesis of a catalyst of formula (I) 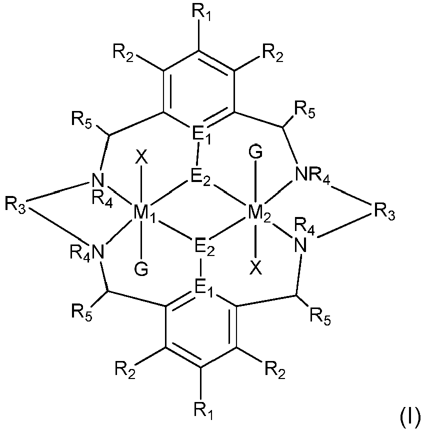 the method comprising:
a) Reacting a ligand of formula (Ib): 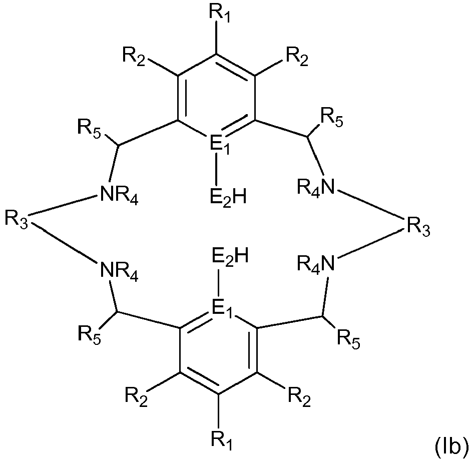 with a compound of formula (IV):

   M₁(R_{M1})ₙ (IV)

   wherein n corresponds to the oxidation state of M₁;
   R_{M1} is independently selected from hydrogen, alkyl, alkenyl, alkynyl, cycloalkyl, cycloalkenyl, cycloalkynyl, aryl, heteroaryl, amino, alkoxy, aryloxy, alkylthio and alkylaryl; and
b) Reacting the product of step a) with a compound of formula (V):

   M₂(X)ₘ (V)

   wherein m corresponds to the oxidation state of M₂;
c) optionally adding a compound comprising G;
   wherein
   M₁ and M₂ are different and are independently selected from Mg, Zn, Fe, Co, Al and Cr;
   R₁ and R₂ are independently selected from hydrogen, halide, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
   R₃ is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
   R₄ is independently selected from H, or optionally substituted aliphatic, heteroaliphatic, alicyclic, heteroalicyclic, aryl, heteroaryl, alkylheteroaryl or alkylaryl;
   R₅ is H, or optionally substituted aliphatic, heteroaliphatic, alicyclic, heteroalicyclic, aryl, heteroaryl, alkylheteroaryl or alkylaryl;
   E₁ is C, E₂ is O, S or NH or E₁ is N and E₂ is O;
   X is independently selected from OC(O)R^{x}, OSO₂R^{x}, OSOR^{x}, OSO(R^{x})₂, S(O)R^{x}, OR^{x}, phosphinate, halide, nitrate, hydroxyl, carbonate, amino, amido or optionally substituted aliphatic, heteroaliphatic, alicyclic, heteroalicyclic, aryl or heteroaryl;
   Rₓ is independently hydrogen, or optionally substituted aliphatic, haloaliphatic, heteroaliphatic, alicyclic, heteroalicyclic, aryl, alkylaryl or heteroaryl; and
   G is absent or independently selected from a neutral or anionic donor ligand which is a Lewis base.

The skilled person will understand that the definitions of the groups R₁ to R₅, E₁, E₂, X, G M₁ and M₂ in the fourth aspect of the invention correspond to the definitions of the groups R₁ to R₅, E₁, E₂, X, M₁ and M₂ in the catalyst of the first aspect to be produced by the method.

Preferably M₁ is Zn or Mg, and even more preferably M₁ is Zn and M₂ is Mg. However, the skilled person will appreciate that for the method of the fourth aspect, the labelling of the metal atom can be switched such that M₂ is preferably Zn or Mg, and even more preferably M₁ is Mg and M₂ is Zn.

The compound of formula (IV) may be any organometallic compound comprising M₁. The term "organometallic" is intended to cover compounds having a M₁-C bond, as well as compounds having an M₁-S bond, an M₁-N bond and/or an M₁-O bond. Preferably R_{M1} may be independently selected from optionally substituted alkyl, alkenyl, aryl, heteroaryl, alkoxy, aryloxy, amino, thioalkyl and alkylaryl. R_{M1} may be the same of different. Exemplary options for R_{M1} include Me, Et, n-Pr, iPr, N-Bu, tBu, ethylhexyl, hexyl, octyl, cyclohexyl, benzyl (Bn), adamantyl, OEt, OPh, C(SiMe₃)₃, N(SiMe₃)₂, N(SiHMe₂)₂, N(SiH₂Me)₂ and N(SiH₃)₂. For example, when M₁ is Zn, the compound of formula (IV) may be Et₂Zn or EtZnOEt.

The compound of formula (IV) may be added in a ratio of about 1:0.01 to about 0.01:1, such as about 1:1 relative to the ligand of formula (lb). The compound of formula (V) may be added in a ratio of about 1:0.01 to about 0.01:1, such as about 1:1 relative to the ligand of formula (lb).

The process of the fourth aspect may be carried out in the presence of a solvent. Examples of solvents useful in the fourth aspect include toluene, diethyl carbonate, dimethyl carbonate, dioxane, dichlorobenzene, methylene chloride, propylene carbonate, ethylene carbonate, tetrahydrofuran (THF), pyridine, acetonitrile, etc.

The skilled person will appreciate that when G is present, it may be added to the reaction at any point. If the reaction is carried out in a solvent, G may be present in the solvent used (i.e. the solvent and G may be THF, pyridine or acetonitrile). The skilled person will also appreciate that when G is negatively charged, then one or more positive counterions will be required to balance out the charge of the compound added to the process. Suitable counterions are as described above for the first aspect. For example, if G is Cl⁻, then the compound to be added to the process may be bis(triphenylphosphine) iminium chloride (PPNCI), Et₃NHCl or KCl.

Step a) of the process of the fourth aspect of the invention may be carried out at a temperature of from about -80°C to about 100°C. The duration of step a) may be up to 24 hours, such as from about 1 minute to about 12 hours.

Step b) of the process of the fourth aspect of the invention may be carried out at a temperature of from about -80°C to about 100°C. The duration of step b) may be up to 24 hours, such as from about 1 minute to about 12 hours.

Purely by way of example of the method of the fourth aspect, when the catalyst to be produced is [L¹ZnMg(OAc)₂], the method of the fourth aspect involves a) reacting the compound H₂L¹ with a compound Zn(R_{M1})₂, and then b) subsequently reacting the product of step a) with Mg(OAc)₂.

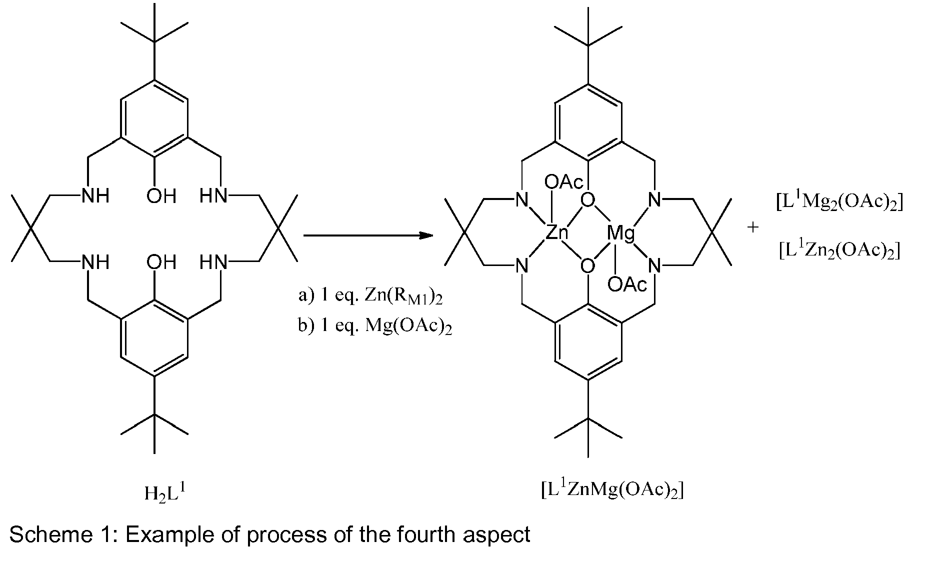

### Examples

### Example 1

### Materials

The synthesis of the macrocyclic pro-ligands H₂Lⁿ were carried out as previously reported (M. R. Kember et al, Angew. Chem. Int. Ed., 2009, 48, 931-933). The synthesis of metal complexes and catalyst systems were carried out under anhydrous conditions, using either a Schlenk line or a nitrogen-filled glovebox. Catalysts A and B were synthesised according to literature procedure (M. R. Kember, P. D. Knight, P. T. R. Reung and C. K. Williams, Angew. Chem. Int. Ed., 2009, 48, 931-933, 1. M. R. Kember et al, Angew. Chem. Int. Ed., 2009, 48, 931-933, M. R. Kember and C. K. Williams, J. Am. Chem. Soc., 2012, 134, 15676-15679).

All solvents and reagents were obtained from Sigma Aldrich and Strem. THF was dried by refluxing over sodium and benzophenone and stored under nitrogen. Cyclohexene oxide (CHO) was dried over MgSO₄ and fractionally distilled under nitrogen. All dry solvents and reagents were stored under nitrogen and degassed by several freeze-pump-thaw cycles. Research grade carbon dioxide was used for copolymerization studies. The high pressure copolymerization reactions were carried out in a Parr 5513 100 mL bench reactor.

¹H and ¹³C{¹H} NMR spectra were recorded on a Bruker AV-400 instrument, unless otherwise stated. All mass spectrometry measurements were performed using a MALDI micro MX micromass instrument. The matrix used was dithranol with KOAc as the ionising agent and THF as the solvent. Elemental Analysis was determined by Stephen Boyer at London Metropolitan University and Alan Dickerson at Cambridge University. Size exclusion chromatography was recorded by a Polymer labs PL GPC-50 instrument. THF was used as the eluent, at a flow rate of 1 mLmin⁻¹. Two polymer labs mixed D columns were used and calibration was carried out by using narrow M_{w} polystyrene standards.

### 1. Preparation of catalysts

### a) Preparation of Catalyst System 1

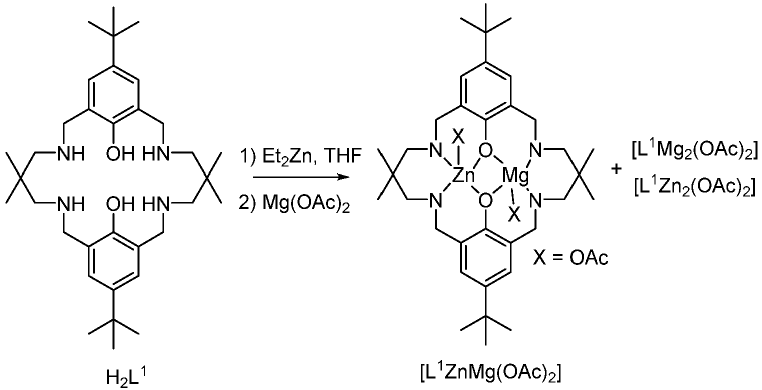

H₂L¹ (0.60 g, 1.09 mmols) was dissolved in dry THF (30 mL) and cooled to -20 °C. Et₂Zn (0.14 g, 1.09 mmols) was dissolved in dry THF (10 mL) and cooled to -20 °C. The Et₂Zn solution was added dropwise to the pro-ligand solution, at -20 °C and was allowed to warm, over 4 h, to 25 °C. Then, Mg(OAc)₂ (0.16 g, 1.09 mmols) was added to the reaction mixture and this was left to stir for 16 h. The solvent was removed under vacuum to produce a white solid (0.70 g, 85%). Calc. for C₃₈H₆₀O₂N₂MgZn : C, 60.17; H, 7.97; N, 7.39; Found: C, 59.88; H, 7.87; N, 7.31 %; MS (MALDI-TOF): m/z 697 ([L¹MgZn(OAc)]⁺, 100%), 657 ([L¹Mg₂(OAc)]⁺, 25%), 739 ([L¹Zn₂(OAc)]⁺, 45%); ¹³C NMR (400 MHz, C₆D₆): δC =176.2, 163.5, 135.6, 125.9, 123.6, 62.3, 56.2, 34.2, 32.1, 27.9, 26.5, 24.4, 20.9 ppm.

### b) Preparation of Catalyst System 2

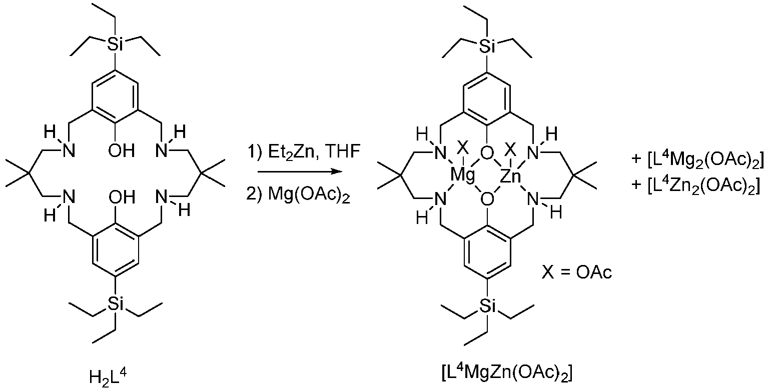

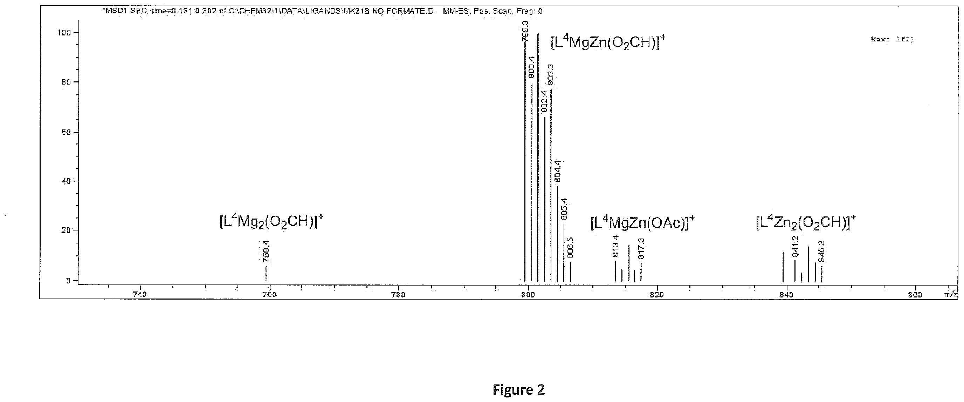

H₂L⁴ (0.2 g, 0.3 mmol) was dissolved in dry THF (5mL) under nitrogen at 25 °C. Et₂Zn (0.037g, 0.3mmol) was dissolved in dry THF (2 mL), added to the ligand solution and stirred overnight. Mg(OAc)2 (0.043g, 0.3 mmol) was added and the solution stirred for a further 4 hours. The solvent was removed under vacuum to yield a white solid (0.23g, 0.27 mmol, 90%). MS (ESI): *m*/*z* 799.3 (100%, [L⁴MgZn(O₂CH)]⁺), 813.4 (20%, [L⁴MgZn(OAc)]⁺), 759.4 (10%, [L⁴Mg2(O₂CH)]⁺), 841.3 (15%, [L⁴Zn₂(O₂CH)]⁺). ESI-MS spectra run in MeCN containing (0.1 % NH₄⁺O₂CH⁻); see Figure 2.

### c) Preparation of [L⁴ZnMg(OAc)2] from Catalyst System 2

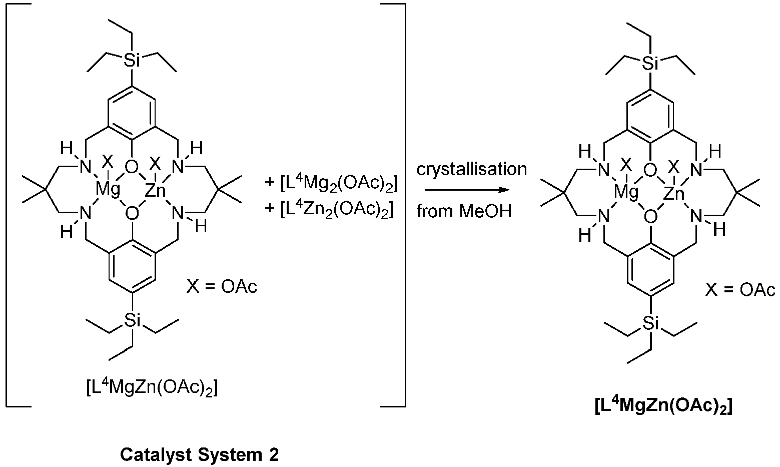

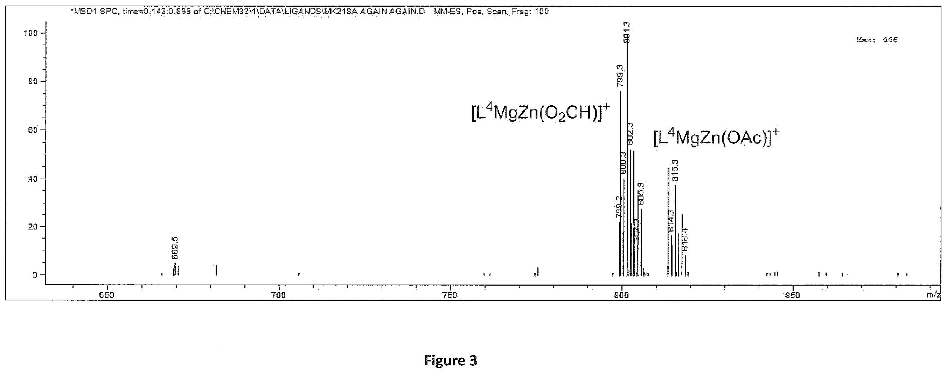

Catalyst System 2 (0.15g) was dissolved in 2mL MeOH and placed in an NMR tube with a stopper. Large colourless crystals grew overnight and were filtered off. The crystals were analysed by ESI-MS (in MeCN with 0.1 % NH₄⁺O₂CH⁻); see Figure 3, which showed almost a complete disappearance of the peaks corresponding to the two homo-bimetallic compounds, [L⁴Mg₂(OAc)₂] and [L⁴Zn₂(OAc)₂] indicating the compound contains almost pure (>95%) hetero-bimetallic compound [L⁴MgZn(OAc)₂]. MS (ESI): *m*/*z* 799.3 (100%, [L⁴MgZn(O₂CH)]⁺), 813.4 (50%, [L⁴MgZn(OAc)]⁺), 759.4.
ESI-MS spectra run in MeCN containing (0.1 % NH₄⁺O₂CH⁻); see Figure 3.

### d) Preparation of Catalyst system 3

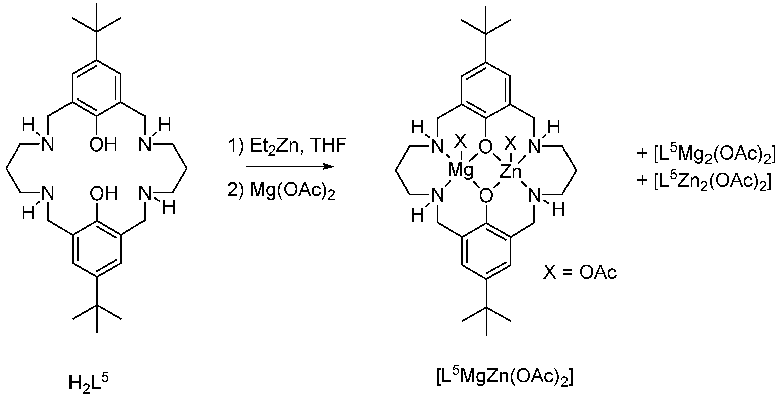

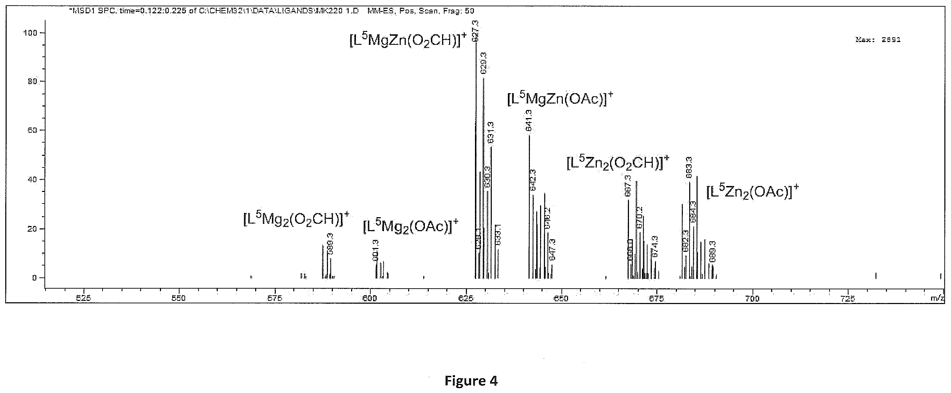

H₂L⁵ (0.5 g, 1.01 mmol) was dissolved in dry THF (10 mL) under nitrogen at 25 °C. Et₂Zn (0.124 g, 1.01 mmol) was dissolved in dry THF (3 mL), added to the ligand solution and stirred overnight. Mg(OAc)₂ (0.143g, 1.01 mmol) was added along with MeOH (5 mL) and the solution stirred for a further 4 hours. The solvent was removed under vacuum to yield a white solid (0.62g, 0.88 mmol, 89%). MS (ESI): *m*/*z* 627.3 (100%, [L⁵MgZn(O₂CH)]⁺), 641.3 (60%, [L⁵MgZn(OAc)]⁺), 587.3 (15%, [L⁵Mg2(O₂CH)]⁺), 601.3 (10%, [L⁵Mg2(OAc)]⁺), 667.3 (40%, [L⁵Zn₂(O₂CH)]⁺), 681.2 (40%, [L⁵Zn₂(OAc)]⁺).
ESI-MS spectra run in MeCN containing (0.1 % NH₄⁺O₂CH⁻); see Figure 4.

### e) Preparation of Catalyst System 4

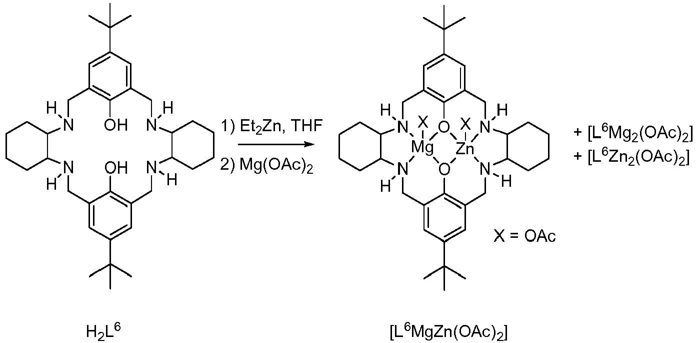

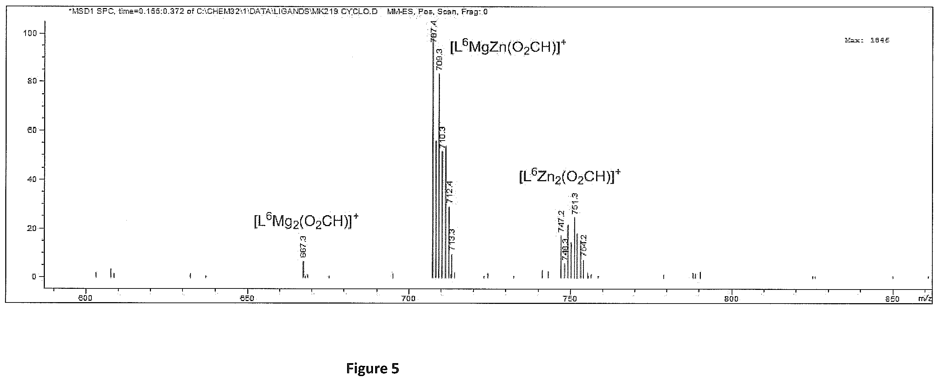

H₂L⁶ (0.33 g, 0.58 mmol) was dissolved in dry THF (5 mL) under nitrogen at 25 °C. Et₂Zn (0.071 g, 0.58 mmol) was dissolved in dry THF (3 mL), added to the ligand solution and stirred overnight. Mg(OAc)₂ (0.082 g, 0.58 mmol) was added along with MeOH (5 mL) and the solution stirred for a further 4 hours. The solvent was removed under vacuum to yield a white solid (0.4g, 0.52 mmol, 89%). MS (ESI): *m*/*z* 707.4 (100%, [L⁶MgZn(O₂CH)]⁺), 667.3 (10%, [L⁶Mg₂(O₂CH)]⁺), 747.2 (30%, [L⁶Zn₂(O₂CH)]⁺).
ESI-MS spectra run in MeCN containing (0.1 % NH₄⁺O₂CH⁻); see Figure 5.

### f) Preparation of Catalyst System 5

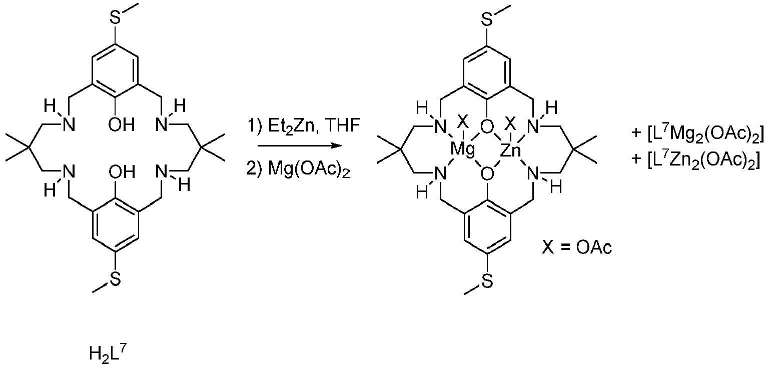

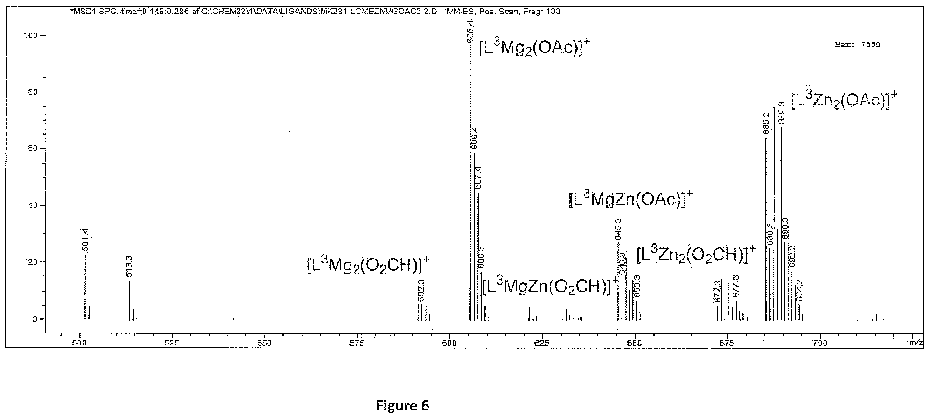

H₂L⁷ (0.37 g, 0.70 mmol) was dissolved in dry THF (5 mL) under nitrogen at 25 °C. Et₂Zn (0.087 g, 0.70 mmol) was dissolved in dry THF (3 mL), added to the ligand solution and stirred overnight. Mg(OAc)₂ (0.10 g, 0.70 mmol) was added along with MeOH (1 mL) and the solution stirred for a further 4 hours. The solvent was removed under vacuum to yield a white solid (0.38g, 0.52 mmol, 74%). MS (ESI): *m*/*z* 677.2 (90%, [L⁷MgZn(OAc)]⁺), 637.3 (100%, [L⁷Mg₂(OAc)]⁺), 717.1 (50%, [L⁶Zn₂(OAc)]⁺).
ESI-MS spectra run in MeCN containing (0.1 % NH₄⁺O₂CH⁻); see Figure 6.

### g) Preparation of Catalyst System 6

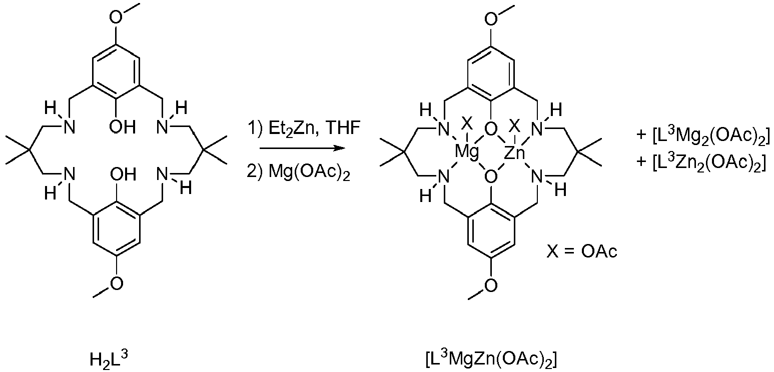

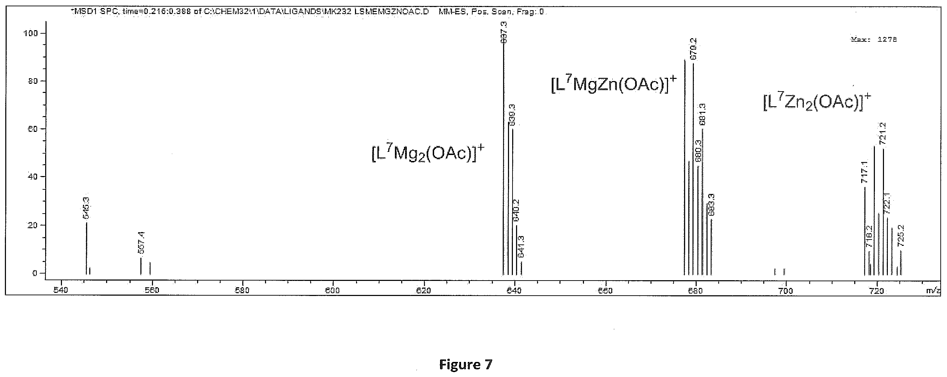

H₂L³ (0.34 g, 0.67 mmol) was dissolved in dry THF (5 mL) under nitrogen at 25 °C. Et₂Zn (0.083 g, 0.67 mmol) was dissolved in dry THF (3 mL), added to the ligand solution and stirred overnight. Mg(OAc)₂ (0.096 g, 0.67 mmol) was added along with MeOH (1 mL) and the solution stirred for a further 4 hours. The solvent was removed under vacuum to yield a white solid (0.42g, 0.60 mmol, 90%). MS (ESI): *m*/*z* 631.2 (5%, [L³MgZn(O₂CH)]⁺), 645.3 (30%, [L³MgZn(OAc)]⁺), 591.3 (10%, [L³Mg₂(O₂CH)]⁺), 605.4 (100%, L³Mg₂(OAc)]⁺), 673.2 (10%, L³Zn₂(O₂CH)]⁺), 685.2 (75%, L³Zn₂(OAc)]⁺).
ESI-MS spectra run in MeCN containing (0.1 % NH₄⁺O₂CH⁻); see Figure 7.

### h) Preparation of Catalyst System 7 (∼65% [L¹MgZnBr₂])

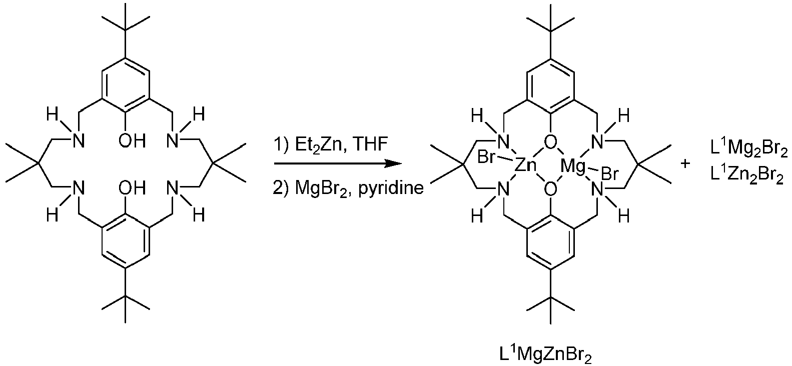

H₂L¹ (0.112 g, 0.2 mmol) was dissolved in dry THF (10 mL) under nitrogen at 25 °C. Et₂Zn (20 µL, 0.2 mmol) was added to the ligand solution and stirred overnight. Pyridine solvent was added (5 mL), followed by a solution of MgBr₂ (0.038 g, 0.2 mmol) in a mixed THF (15 mL)/pyridine (5 mL) solvent system. The solution was stirred for 1 hour and the solvent was subsequently removed under vacuum to yield an off-white solid (0.158 g, 98 %).

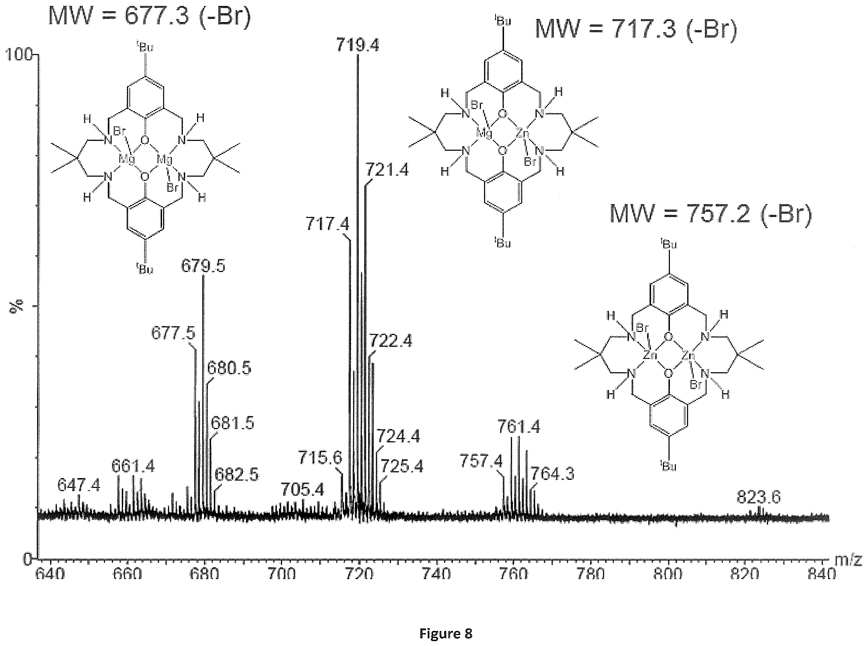

MALDI-ToF spectra (Figure 8) run using dithranol matrix with KCI as the ionising agent and THF as the solvent: *m*/*z* 677.5 [LMg₂Br]⁺, 717.4 [LMgZnBr]⁺, 757.4 [LZn₂Br]⁺.

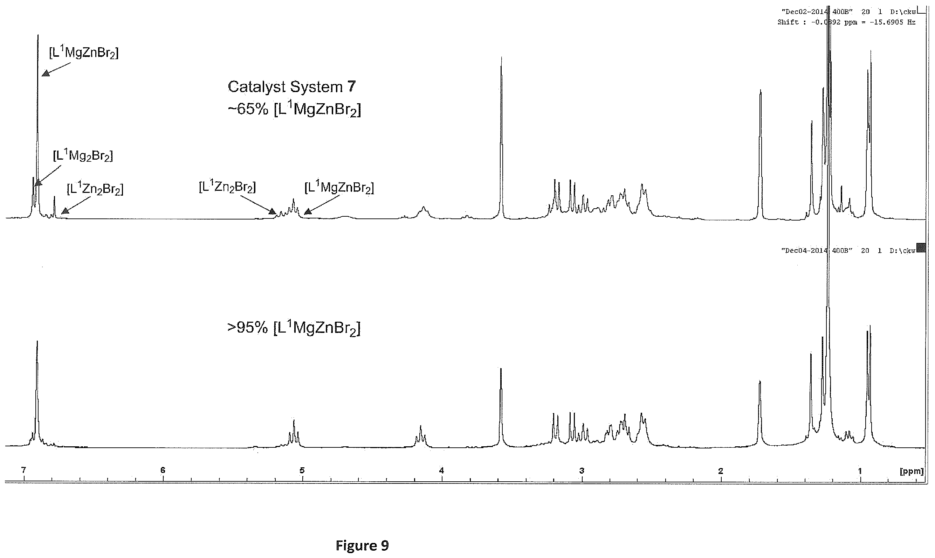

In this case the ¹H NMR spectrum (Figure 9, top) could be easily interpreted and compared to those of the two homo-bimetallic compounds [L¹Mg₂Br₂] and [L¹Zn₂Br₂]. Analysis of the ¹H NMR integrals confirm the Catalyst System 7 contains ∼ 65% hetero-bimetallic [L¹MgZnBr₂].

### i) Preparation of [L¹MgZnBr₂] (>95%)

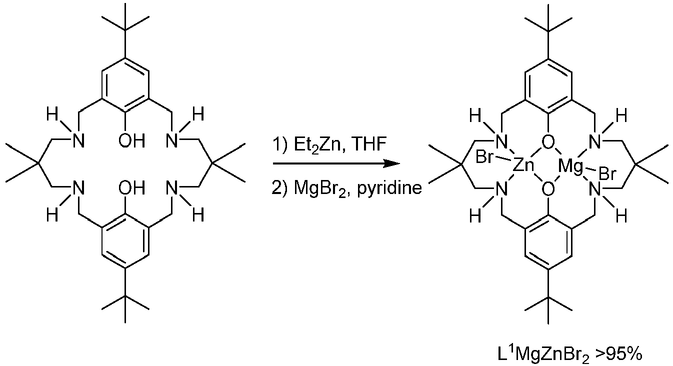

H₂L¹ (0.112 g, 0.2 mmol) was weighed into a Schlenk flask and dissolved in dry THF (10 mL) Et₂Zn was subsequently added (20 µL, 0.2 mmol) and the reaction mixture was stirred overnight. Pyridine (5 mL) was subsequently added and the reaction medium was cooled to -78°C. To this, a solution of MgBr₂ (0.0375 g, 0.204 mmol) in pyridine (5 mL)/THF (15 mL) was added dropwise over a period of 15 minutes. Once the addition was finished, the reaction was allowed to stir for 15 minutes, and then the dry ice bath was removed. After a further 30 minutes, all solvent was removed *in vacuo,* affording a pale yellow powder. The product was dried *in vacuo* for 2 hours to yield a pale yellow solid (0.0910 g, 51%). MALDI-ToF spectra run using dithranol matrix with KCI as the ionising agent and THF as the solvent: *m*/*z* 677.5 [LMg₂Br]⁺, 717.4 [LMgZnBr]⁺, 757.4 [LZn₂Br]⁺. The ¹H NMR spectrum (Figure 9, bottom) demonstrates the almost complete disappearance of peaks which are known to correspond to [L¹Mg₂Br₂] and [L¹Zn₂Br₂].

### j) Preparation of Catalyst System 8

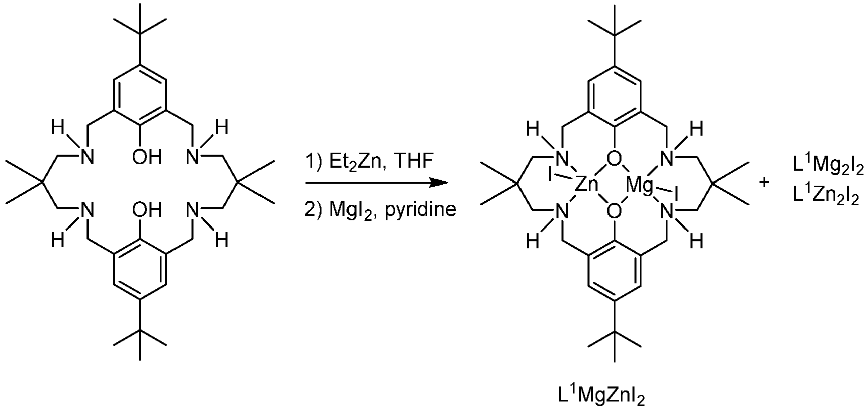

H₂L¹ (0.112 g, 0.2 mmol) was dissolved in dry THF (5 mL) under nitrogen at 25 °C. Et₂Zn (20 µL, 0.2 mmol) was subsequently added to the ligand solution and stirred overnight. Pyridine solvent was added (5 mL), followed by a turbid solution of MgI₂ (0.057 g, 0.2 mmol) in a mixed THF (15 mL)/pyridine (5 mL) solvent system. The solution was stirred for 90 minutes and the solvent was subsequently removed under vacuum to yield a pale yellow solid (0.046 g, 25 %).

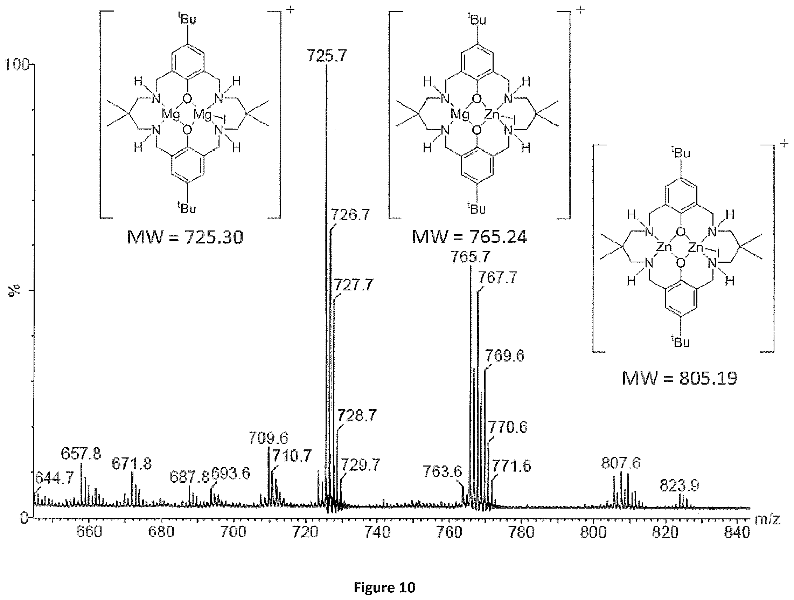

MALDI-ToF spectra (Figure 10) run using dithranol matrix with KCI as the ionising agent and THF as the solvent: *m*/*z* 725.7 [LMg₂I]⁺, 765.7 [LMgZnI]⁺, 805.6 [LZn₂I]⁺.

### k) Preparation of Catalysts System 9

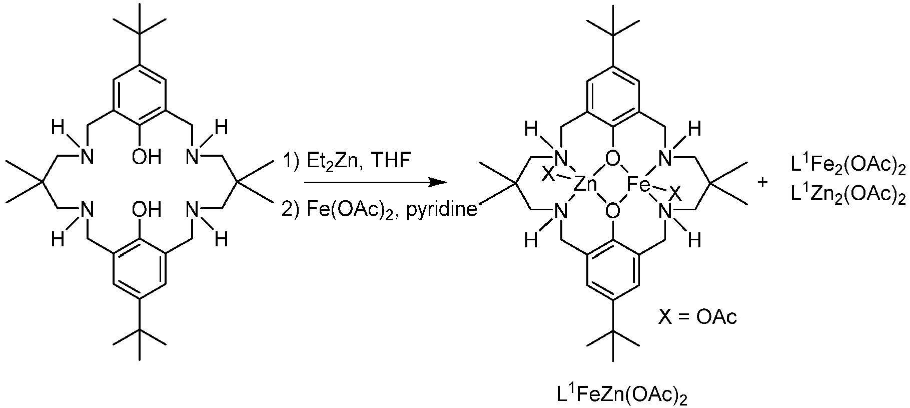

H₂L¹ (0.179 g, 0.3 mmol) was dissolved in dry THF (12.5 mL) under nitrogen at 25 °C. Et₂Zn (33 µL, 0.3 mmol) was subsequently added to the ligand solution and stirred overnight. Pyridine solvent was added (2.5 mL), followed by the dropwise addition of a yellow/brown solution of Fe(OAc)₂ (0.057 g, 0.3 mmol) in a mixed THF (7.5 mL)/pyridine (1 mL) solvent system. The solution was stirred for 1 hour, over which time a colour change from yellow/brown to brown occurred. All solvent was subsequently removed under vacuum to yield a brown powder (0.142 g, 55 %).

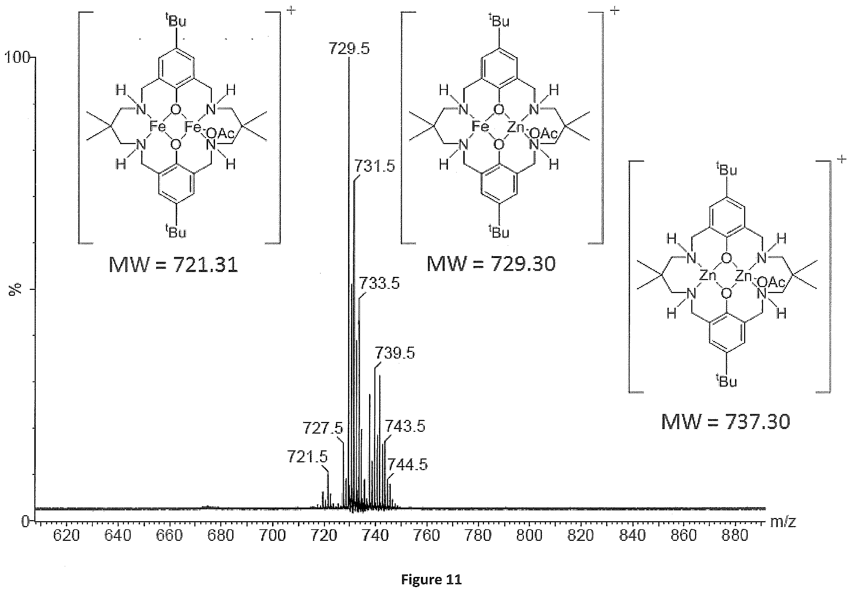

MALDI-ToF spectra (Figure 11) run using dithranol matrix with KCI as the ionising agent and THF as the solvent: *m*/*z* 721.5 [LFe₂(OAc)]⁺, 729.5 [LFeZn(OAc)]⁺, 737.5 [LZn₂(OAc)]⁺.

### l) Preparation of Catalyst System 10

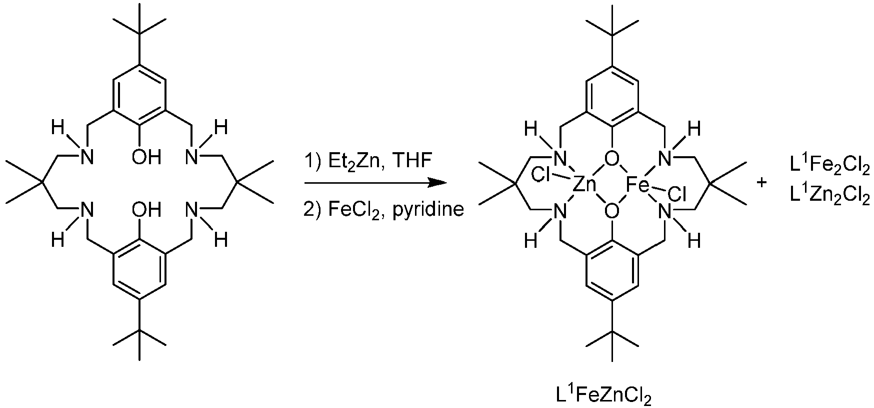

H₂L¹ (0.179 g, 0.3 mmol) was dissolved in dry THF (10 mL) under nitrogen at 25 °C. Et₂Zn (33 µL, 0.3 mmol) was subsequently added to the ligand solution and stirred overnight. Pyridine solvent was added (2.5 mL), followed by the dropwise addition of a yellow solution of FeCl₂ (0.041 g, 0.3 mmol) in a mixed THF (7.5 mL)/pyridine (2.5 mL) solvent system. The solution was stirred for 1 hour, over which time a colour change from yellow to brown occurred. All solvent was subsequently removed under vacuum to yield a brown powder (0.181 g, 75 %).

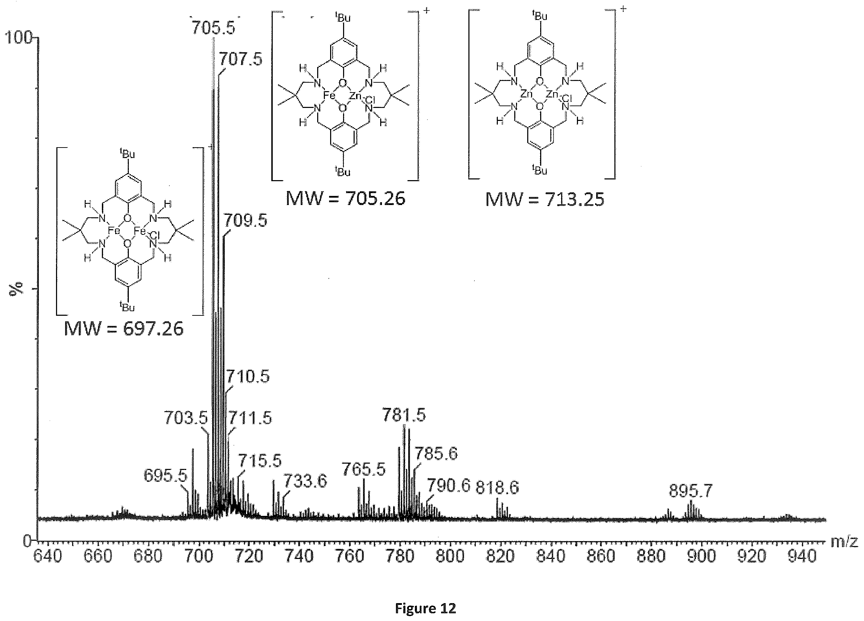

MALDI-ToF spectra (Figure 12) run using dithranol matrix with KCI as the ionising agent and THF as the solvent: *m*/*z* 697.5 [LFe₂Cl]⁺, 705.5 [LFeZnCl]⁺, 713.5 [LZn₂Cl]⁺.

### m) Preparation of Catalyst System 11

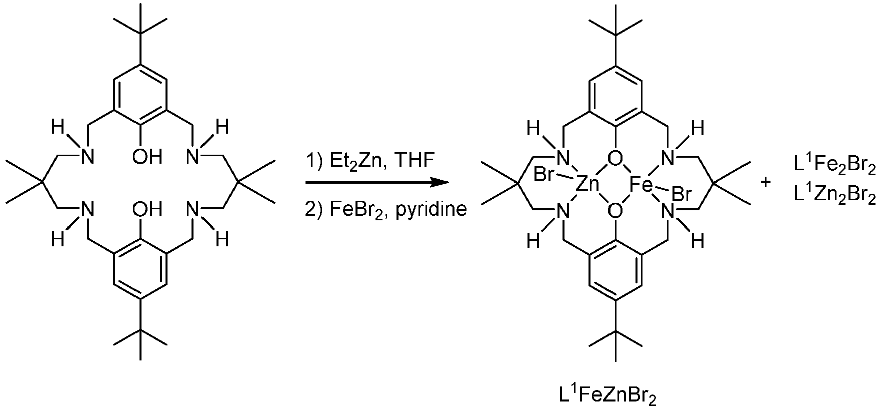

H₂L¹ (0.179 g, 0.3 mmol) was dissolved in dry THF (12.5 mL) under nitrogen at 25 °C. Et₂Zn (33 µL, 0.3 mmol) was subsequently added to the ligand solution and stirred overnight. Pyridine solvent was added (2.5 mL), followed by the dropwise addition of a brown/yellow suspension of FeBr₂ (0.070 g, 0.3 mmol) in a mixed THF (9 mL)/pyridine (1 mL) solvent system. The solution was stirred for 1 hour, over which time a colour change to an orange/brown suspension was observed. All solvent was subsequently removed under vacuum to yield a brown powder (0.157 g, 58 %).

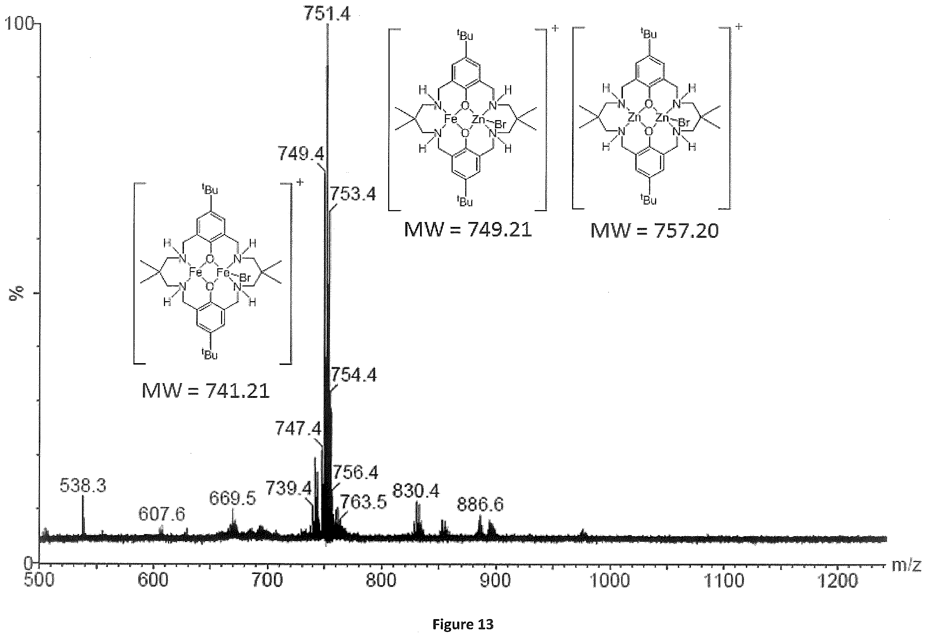

MALDI-ToF spectra (Figure 13) run using dithranol matrix with KCI as the ionising agent and THF as the solvent: *m*/*z* 741.4 [LFe₂Br]⁺, 749.4 [LFeZnCl]⁺, 757.4 [LZn₂Cl]⁺.

### n) Preparation of Catalyst System 12

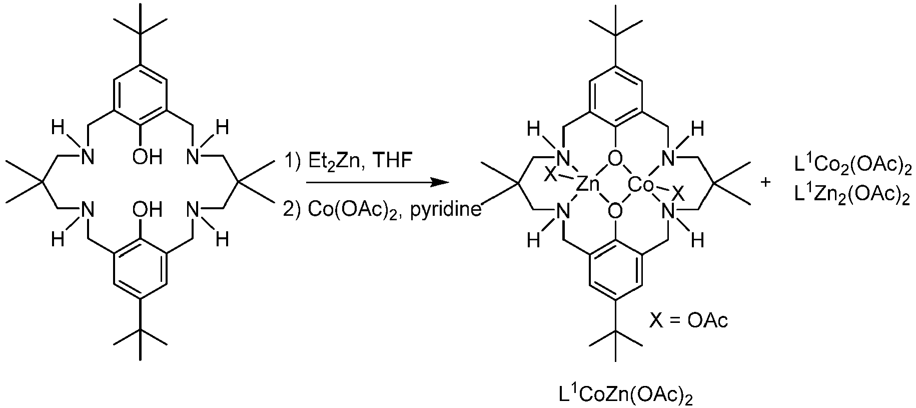

H₂L¹ (0.179 g, 0.3 mmol) was dissolved in dry THF (10 mL) under nitrogen at 25 °C. Et₂Zn (33 µL, 0.3 mmol) was subsequently added to the ligand solution and stirred overnight. Pyridine solvent was added (2.5 mL), followed by the dropwise addition of a purple solution of Co(OAc)₂ (0.057 g, 0.3 mmol) in a mixed THF (10 mL)/pyridine (2.5 mL) solvent system. The solution was stirred for 1 hour, over which time a colour change from pink to brown occurred. All solvent was subsequently removed under vacuum to yield a brown powder (0.172 g, 67 %).

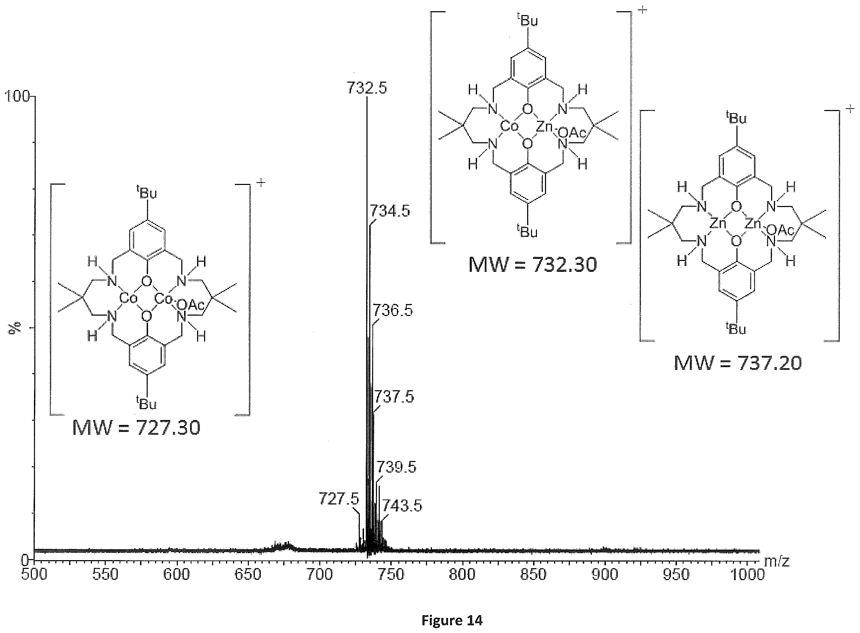

MALDI-ToF spectra (Figure 14) run using dithranol matrix with KCI as the ionising agent and THF as the solvent: *m*/*z* 727.5 [LCo₂(OAc)]⁺, 732.5 [LCoZn(OAc)]⁺, 737.5 [LZn₂(OAc)]⁺.

### o) Preparation of Catalyst System 13

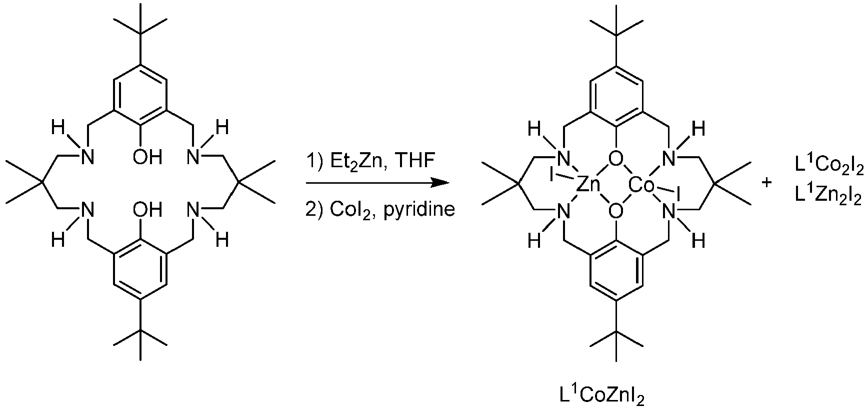

H₂L¹ (0.179 g, 0.3 mmol) was dissolved in dry THF (12.5 mL) under nitrogen at 25 °C. Et₂Zn (33 µL, 0.3 mmol) was subsequently added to the ligand solution and stirred overnight. Pyridine solvent was added (2.5 mL), followed by the dropwise addition of a blue/green suspension of CoI₂ (0.101 g, 0.3 mmol) in a mixed THF (27.5 mL)/pyridine (2.5 mL) solvent system. The solution was stirred for 1 hour, over which time a purple solution was formed. All solvent was subsequently removed under vacuum to yield a purple powder (0.234 g, 78 %).

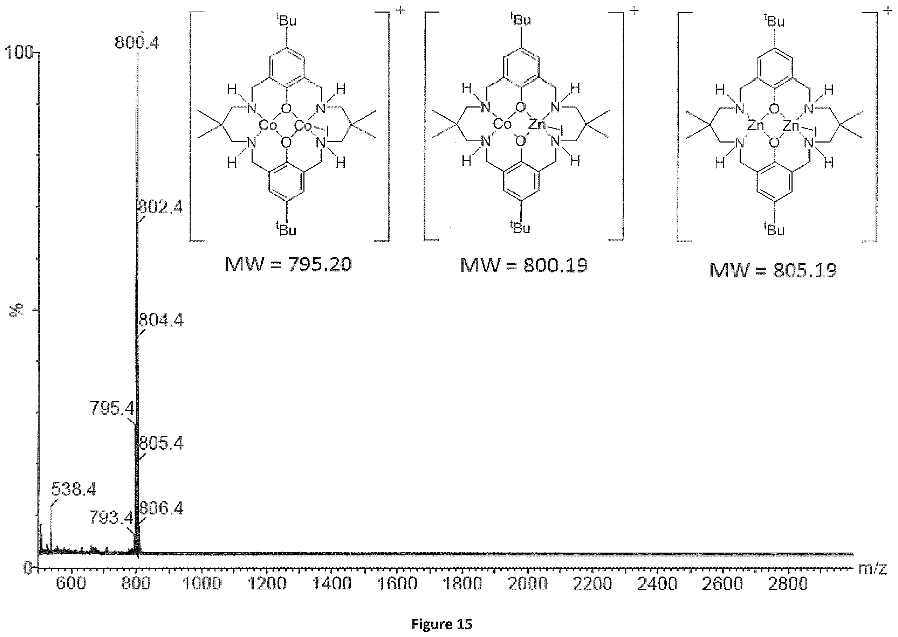

MALDI-ToF spectra (Figure 15) run using dithranol matrix with KCI as the ionising agent and THF as the solvent: *m*/*z* 795.4 [LCo₂I]⁺, 800.4 [LCoZnI]⁺, 805.4 [LZn₂I]⁺.

### p) Preparation of Catalyst System 14

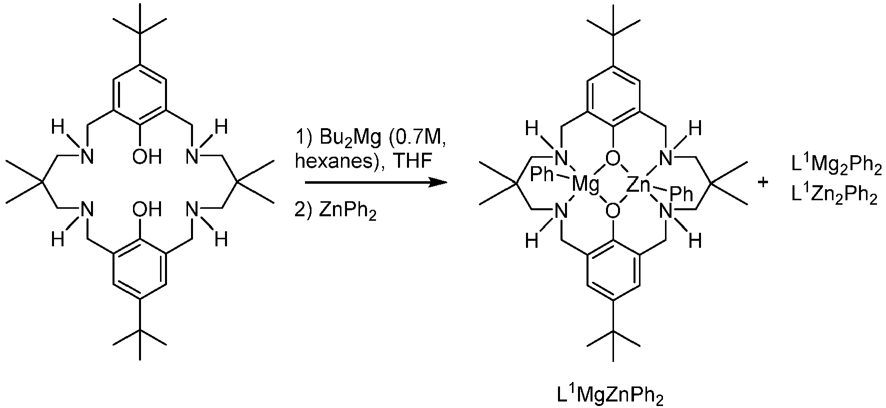

H₂L¹ (0.1 g, 0.181 mmol) was dissolved in dry THF (10 mL) and placed in the glovebox freezer (-40 °C). 0.26 mL of *n*-butyl-sec-butylmagnesium solution (0.7 M in hexane) was added to the THF solution dropwise. Then after four hours Ph₂Zn (40 mg) was added to the solution and left to stir for 16 h at 25 °C in the glovebox. The solvent was then evaporated to produce a off-white solid. ().Calc. for C₄₆H₆₄MgN₄O₂Zn: C, 69.52; H, 8.12; N, 7.05 %. Found: C, 69.31; H, 7.85; N, 6.88 %. MALDI-ToF MS *m*/*z:* 675.4 (30%, [L¹MgZnPh]⁺), 715.3 (60%, [L¹MgZnPh]⁺), 755.3 (40%, [L¹Zn₂Ph]⁺). Due to the air sensitive nature of this compound many decomposition products were also observed in the mass spectrum.

### Results

The characterization data for the mixed metal Catalyst Systems was different to either of the corresponding homo-bimetallic species.. An example of the analysis is given for Catalyst System 1, in comparison with L¹Zn₂(OAc)₂ (Catalyst A) and L¹Mg₂(OAc)₂ (Catalyst B).

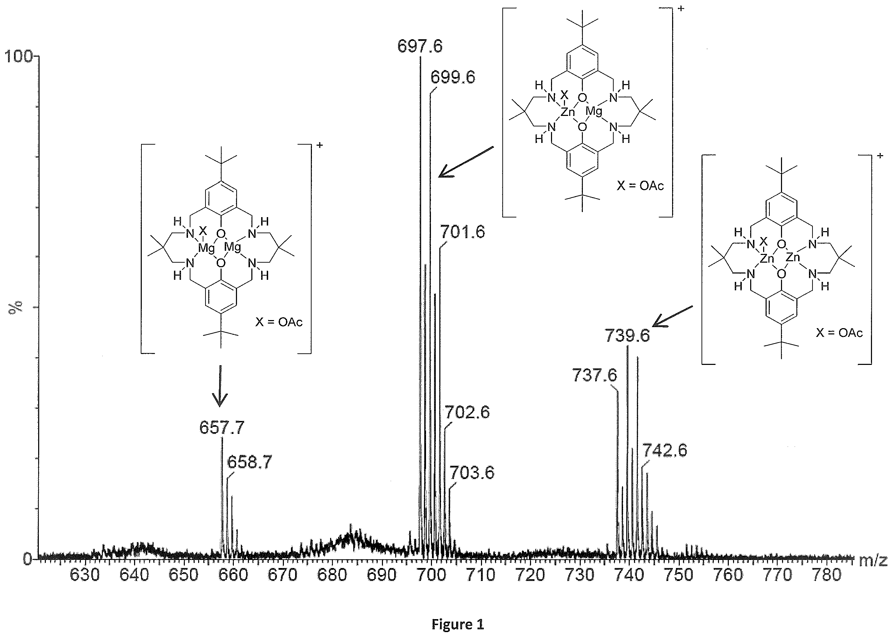

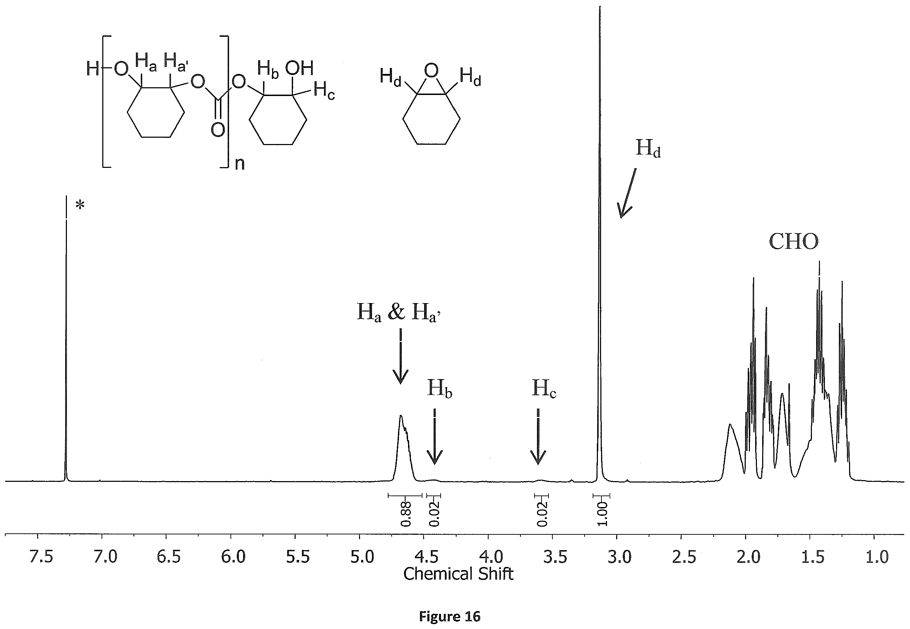

The ¹H NMR spectrum of the Catalyst System 1 (Figure 16) showed the complete consumption of the zinc bound ethyl group and the formation of broadened ligand resonances which are consistent with metal coordination. These broad signals could not be resolved either by changing solvent (e.g. benzene, toluene, tetrachloroethane) or by high/low temperature experiments (-50 to 80°C). This is in contrast to the homodinuclear complexes A and B which both show clearly resolved peaks at elevated temperatures. Elemental analysis showed that the product contained equal quantities of Zn and Mg, as expected. The MALDI-ToF spectrum (Figure 1) showed a peak at 697 amu, which corresponds to the heterodinuclear Zn/Mg complex cation [LZnMg(OAc)]⁺. It has previously observed that this class of complexes are ionized during MALDI-ToF experiments to yield the cations resulting from the loss of a carboxylate co-ligand (M. R. Kember and C. K. Williams, J. Am. Chem. Soc., 2012, 134, 15676-15679, and M. R. Kember, P. D. Knight, P. T. R. Reung and C. K. Williams, Angew. Chem.-Int. Edit., 2009, 48, 931-933). The MALDI-ToF mass spectrum also indicated the presence of both homodinuclear complexes A and B, as evidenced by the peaks at 657 and 739 amu, due to [LMg₂(OAc)]⁺ and [LZn₂(OAc)]⁺, respectively.

In order to rule out the possibility of the mixed metal species being formed only during the MALDI-ToF experiments, an equimolar mixture of A and B was compared. The equimolar mixture of complexes shows only ions associated with the two homodinuclear complexes (i.e. A and B); there is no evidence for any heterodinuclear complex cations. Furthermore, when the equimolar mixture was heated at 80 °C for 16 h (equivalent conditions as during polymerization), the spectrum remained the same, showing only the two homodinuclear complexes.

It was not possible to quantify the mixture composition due to the broad NMR signals, although the expected stoichiometry would be 1:2:1 ([L¹Zn₂(OAc)₂]:[L¹MgZn(OAc)₂]:L¹Mg₂(OAc)₂]) in line with the elemental analysis results.

The catalyst system obtained in Example 1a (Catalyst System **1**) was investigated for its ability to polymerise CO₂ and an epoxide.

### 2. Polymerisation of carbon dioxide and an epoxide

### Low Pressure Copolymerization Reactions

Distilled and dried cyclohexene oxide (2.5 mmol, 25 mmol) and the catalyst (0.025 mmol) were placed in a Schlenk tube. The reaction mixture was de-gassed and then heated to 80 °C at 1 bar CO₂ pressure. After a certain reaction time, the mixture was quenched by exposure to air and a ¹H NMR spectrum of the crude mixture was recorded. Then, the cyclohexene oxide was removed, under vacuum, to yield the polycarbonate, which was purified by dissolving it in THF and precipitating it with MeOH.

### High Pressure Copolymerization Reactions

The Parr reactor was dried for 20 h at 140 °C and purged with CO₂ three times and allowed to cool to 25 °C. Then, the catalyst (0.03 mmol) dissolved in cyclohexene oxide (15 mL, 148 mmol) was added to the Parr reactor. After sealing the reactor, 50 bar of CO₂ was added whilst the reaction mixture was stirring at a low-frequency in order to facilitate CO₂ dissolution. This step was repeated several times until the CO₂ dissolution reached equilibrium and the headspace pressure remained constant. The vessel was heated to the appropriate temperature and stirred for a certain time and then a ¹H NMR spectrum of the crude reaction mixture was recorded. The mixture was then taken up in methylene chloride and evaporated to dryness. The white powder polymer was purified by dissolving it in THF and then precipitation with MeOH.

### a) Polymerisation of an epoxide and carbon dioxide with Catalyst System 1

The activity of Catalyst System **1** for the copolymerization of cyclohexene oxide and carbon dioxide was evaluated using 0.1 mol% of catalyst (vs. epoxide, assuming a 1:2:1 composition), 1 bar pressure of CO₂, at 80 °C and over a 6 hour run, as these conditions had previously proved most effective for A. Catalyst system 1 was compared with the two homodinuclear catalysts (A, B) and with the equimolar mixture (1:1 molar ratio of compounds A:B). The results are shown in Table 1.

**Table 1: Shows the catalytic activity, productivity, selectivity and molecular weight data for runs using catalysts A and B, and Catalyst System 1.**

| Catalyst | TON^{a)} | TOF^{b)} (h⁻¹) | % CO₂^{c)} | *Mₙ*^{d)} (g/mol) | PDI^{d)} |
|---|---|---|---|---|---|
| **A** (LZn₂(OAc)₂) | 99 ± 11 | 17 ± 2 | >99 | 1300 | 1.23 |
| **B** (LMg₂(OAc)₂) | 309 ± 34 | 52 ± 5 | >99 | 5600 | 1.04 |
| **Catalyst System 1** | 476 ± 31 | 79 ± 5 | >99 | 5200 | 1.12 |
| 50:50; A:B | 239 ± 36 | 40 ± 6 | >99 | 2900 | 1.18 |

All copolymerizations were conducted in a Schlenk tube at 0.1 % catalyst loading (vs. CHO), 80°C, 1 bar CO₂ for 6 h. a) The turn over number (TON) = number of moles of cyclohexene oxide consumed/number of moles of catalyst. b) The turn over frequency (TOF) = TON/6. c) Expressed as the percentage carbon dioxide uptake vs the theoretical maximum (100%). This is determined by comparing the relative integrals of the ¹H NMR resonances due to carbonate (δ: 4.65 ppm) and ether (δ: 3.45 ppm) linkages in the polymer backbone. d) Determined by SEC, in THF, using narrow *Mₙ* polystyrene standards as the calibrant.

Catalyst System **1** is clearly significantly more active than either catalyst A or B; indeed, it has nearly twice the activity of catalyst B, which is itself a notably high activity catalyst. Furthermore, it shows considerably higher activity than the equimolar mixture of catalysts A and B. The equimolar mixture has productivity (TON) and activity (TOF) values that closely match those expected on the basis of the mixture composition: i.e TONₘᵢₓₜᵤᵣₑ = (TON₁ + TON₂)/2. This is in line with the mass spectrometry studies that indicated there was no substantial metal exchange between the two catalysts. In contrast, Catalyst System **1** exerts significantly greater activity than the sum of its parts.

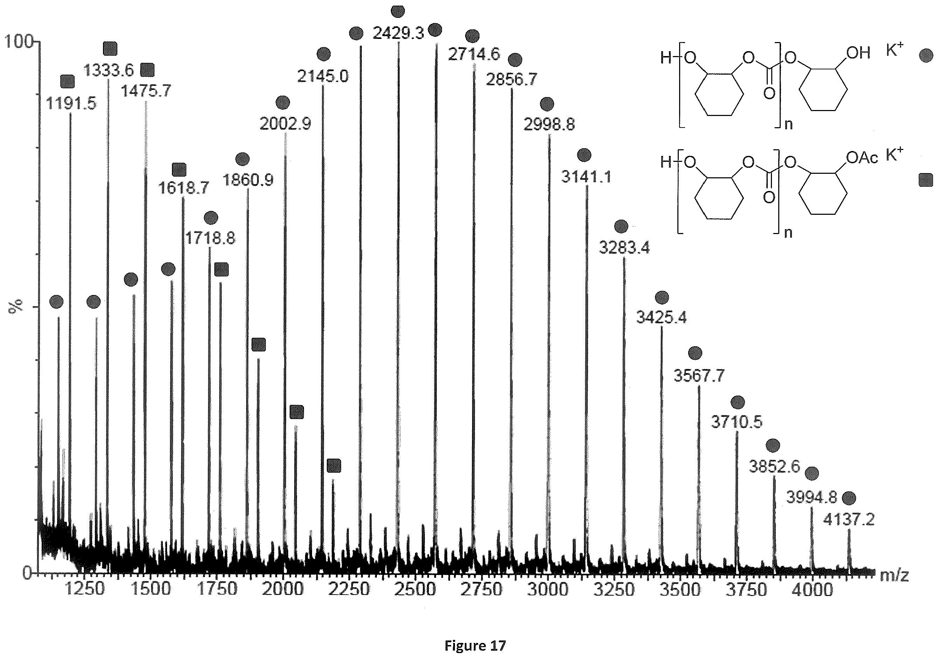

Catalyst system **1** shows excellent selectivity, with near theoretical uptake of carbon dioxide into the polymer backbone and a very low quantity of ether linkages in the resulting polymer (Table 1, Figure 16). All the catalysts yield low *Mₙ* polycarbonates (*Mₙ*< 6000 g/mol), due to efficient chain transfer reactions with protic impurities (alcohols); see, A. Cyriac, et al, Macromolecules, 2010, 43, 7398-7401, F. Jutz, et al, J. Am. Chem. Soc., 2011, 133, 17395-17405; W. J. van Meerendonk, et al, Macromolecules, 2005, 38, 7306-7313. Such *Mₙ* values are highly desirable for the target application as polyols for higher polymer synthesis. Furthermore, using Catalyst System **1** the polydispersity index of the resulting polycarbonate is narrow, indicative of a high degree of polymerization control. The MALDI-ToF spectrum shows two series of chains, both with >99% carbonate linkages, and differing according to the chain end groups: one series is α-acetyl-ω-hydroxyl and the other is α,ω-di-hydroxyl end-capped polycyclohexene carbonate (Figure 17).

In order to better understand and compare the activity of Catalyst System 1 with other known epoxide/CO₂ catalysts, experiments were conducted under a range of conditions; see Table 2.

**Table 2: Catalytic activity, productivity, selectivity and molecular weight data for experiments using Catalyst System 1.**

| **Cat. Sys. 1**:CHO (molar ratio) | Time (h), Temp(°C), Pressure (bar) | TON^{a)} | TOF^{b)} (h⁻¹) | % CO₂^{c)} | Mₙ^{d)} (g/mol) | PDI^{d)} |
|---|---|---|---|---|---|---|
| 1:1000 | 6, 80, 1 | 476 | 79 | >99 | 5200 | 1.12 |
| 1:2000 | 6, 80, 1 | 246 | 41 | >99 | 2600 | 1.12 |
| 1:10,000 | 6, 80, 1 | 196 | 33 | >99 | 800 | 1.12 |
| 1:10,000 | 6, 80, 50 | 196 | 33 | >99 | 710 | 1.19 |
| 1:10,000 | 6, 90, 50 | 1379 | 230 | >99 | 2900 | 1.09 |
| 1:1000 | 3, 90, 50 | 875 | 292 | >99 | 15400 | 1.03 |
| Ref C (di-Mg) 1:200 | 6, 60, 1 | 194 | 32 | >99 | 42800 | 1.56 |
| Ref D (Co salen) 1:5000 | 5, 50, 1 | 1315 | 263 | >99 | 48000 | 1.16 |

| | | | | | | |
|---|---|---|---|---|---|---|
| a) The turn over number (TON) = number of moles of cyclohexene oxide consumed/number of moles of catalyst. b) The turn over frequency (TOF) = TON/reaction period. c) Expressed as the percentage carbon dioxide uptake vs the theoretical maximum (100%). This is determined by comparing the relative integrals of the ¹H NMR resonances due to carbonate (δ: 4.65 ppm) and ether (δ: 3.45 ppm) linkages in the polymer backbone. d) Determined by SEC, in THF, using narrow *Mₙ* polystyrene standards. | | | | | | |

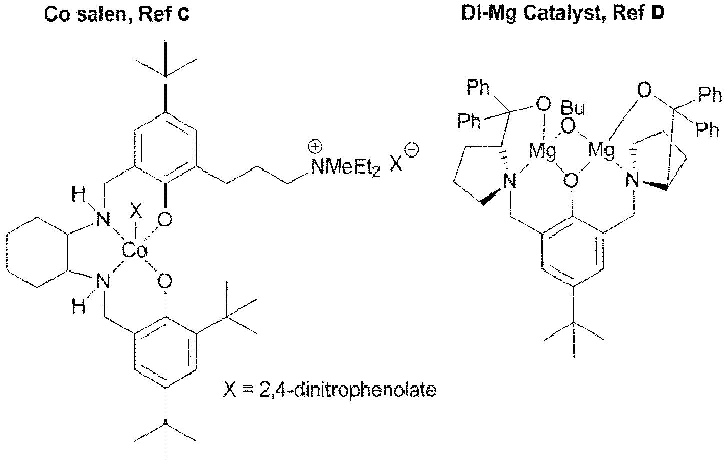

Under all conditions, Catalyst System **1** shows very high degrees of polymerization control, as evidenced by the linear increases in molecular weight with the decreasing catalyst concentration. Furthermore, there is no difference in activity, at a fixed catalyst concentration, by changing the CO₂ pressure which is consistent with the earlier finding, using a zinc catalyst, that the rate is independent of its pressure (F. Jutz, et al, J. Am. Chem. Soc., 2011, 133, 17395-17405). On the other hand, as expected increasing the temperature significantly improves the activity, whilst maintaining a very high selectivity for carbonate linkages. Compared to some of the best other catalysts for CHO/CO₂ copolymerization, this new system displays excellent activity, selectivity and productivity. For example, it displays equivalent or higher productivities and activities to one of the most active cobalt catalysts (W.-M. Ren, et al, Macromolecules, 2010, 43, 1396-1402). Furthermore, compared to one of the few other examples of a di-Mg catalyst, it is 2.5 times faster whilst operating at 5 times lower loading (Y. L. Xiao, et al, Macromolecules, 2006, 39, 128-137).

The poly(cyclohexene carbonate) (PCHC) shows monomodal molecular weight distributions and narrow polydisperity indices. This is surprising given that there are three different catalysts present in the mixture. However, it is proposed that the rapid rate of chain transfer, vs. propagation, leads to the narrow distribution in chain lengths and rapid interconversion between all chains with all the catalysts present (S. Inoue, J. Polym. Sci, Part A: Polym. Chem., 2000, 38, 2861-2871). This finding is particularly important as it illustrates the potential for such mixed catalyst systems in CO₂/epoxide copolymerization. Our approach highlights the potential to substantially improve catalyst activity via such a mixed systems approach. Thus, using the Catalyst System **1** allows for an excellent quality of the copolymer formed in terms of molecular weight/PDI.

Reactions were carried out to determine the activity and stability of Catalyst System 1 in the presence of water; see table 3.

**Table 3: CHO/CO₂ Copolymerization data for Catalyst System 1 with 16 eq. of H₂O.**

| **Catalyst system 1** | TON^{a} | TOF (h⁻¹)^{b} | % Carbonate^{c} | % Ether^{c} | *Mₙ* (g/mol^{d}) | PDI^{d} |
|---|---|---|---|---|---|---|
| **Without H₂O** | 286 | 71 | 99 | 1 | 4000 | 1.16 |
| **With 16 eq. H₂O** | 248 | 62 | 99 | 1 | 1300 | 1.14 |

All copolymerizations carried out at in a Schlenk tube for 4h at 80 °C and 1 bar CO₂, at a 1:1000 CHO:catalyst loading. ^{a}The turn over number (TON) = number of moles of cyclohexene oxide consumed/number of moles of catalyst. ^{b}The turn over frequency (TOF) = TON/reaction period.^{c} Determined by the relative integrals of the signals at 3.45 ppm (ether linkages) and 4.65 ppm (polycarbonate)^{d} Determined by SEC in THF, using narrow M*ₙ* polystyrene standards.

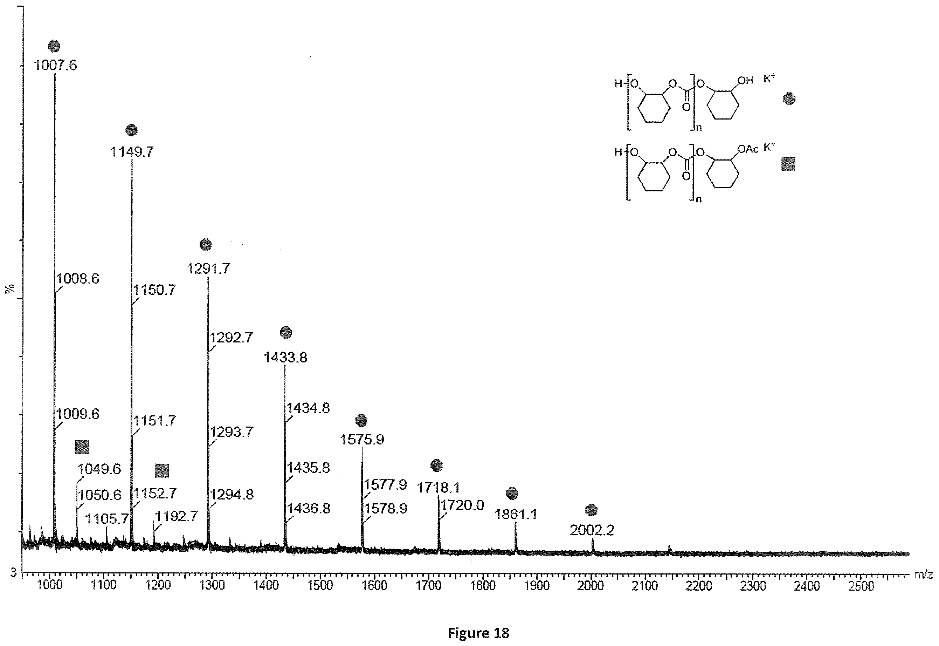

It is important that Catalyst System **1** retains its high activity even when 16 equivalents of H₂O (vs. catalyst) are added to the reaction (Table 3). This remarkable tolerance to water is highly advantageous, particularly as it obviates complex and difficult drying of epoxides and CO₂ whilst at the same time improving the selectivity for the desired polyol product. The addition of protic reagents, such as water, results in chain transfer via the formation of cyclohexane diol from which telechelic dihydroxyl terminated polymers are produced (F. Jutz, et al, J. Am. Chem. Soc., 2011, 133, 17395-17405). Thus, when 16 equivalents of water are added to polymerizations catalysed by Catalyst System **1,** the *Mₙ* of polycarbonate reduces to 1300 g/mol, whilst the PDI remains narrow (1.14). Importantly, the α,ω-di-hydroxyl end-capped PCHC chains are produced as the major product, with almost complete suppression of the mono-hydroxyl terminated chains (Figure 18). This selectivity for di-hydroxyl terminated chains is important as such 'polyols' are key reagents for the manufacture of polyurethanes/polyesters.

### b) Polymerisation of an epoxide and carbon dioxide with other Catalyst Systems

### i) Copolymerisation of Cyclohexene Oxide/CO₂ with Catalyst System 7 and [L¹MgZnBr₂]

**Table 4: CHO/CO₂ Copolymerisation data for Catalyst System 7 (∼65% [L¹MgZnBr₂]), [L¹MgZnBr₂] (>95%) and corresponding homo-bimetallic catalysts**

| **Catalyst** | **Time (h)** | **Conversion (%)** | **TON** | **TOF (h⁻¹)** | **Selectivity Polymer %** |
|---|---|---|---|---|---|
| **L¹Zn₂Br₂** | 24 | 0 | 0 | 0 | 0 |
| **L¹Mg₂Br₂** | 18 | 42.6 | 426 | 24 | > 99 |
| **Catalyst System 7 (∼65% [L¹MgZnBr₂]** | 4 | 8.2 | 82 | 20 | > 99 |
| **[L¹MgZnBr₂] > 95%** | 6 | 32.9 | 329 | 55 | > 99 |

| | | | | | |
|---|---|---|---|---|---|
| All copolymerizations carried out at in a Schlenk tube at 80 °C and 1 bar CO₂, at a 1:1000 CHO:catalyst loading. | | | | | |

### ii) Copolymerisation of Cyclohexene oxide/CO₂ for Catalyst System 2, purified [L⁴ZnMg(OAc)₂] and corresponding homo-bimetallic catalysts

**Table 5: CHO/CO₂ Copolymerisation data for Catalyst System 2 and corresponding homo-bimetallic catalysts**

| **Catalyst** | **Time (h)** | **Conversion (%)** | **TON** | **TOF (h⁻¹)** | **Selectivity Polymer %** |
|---|---|---|---|---|---|
| **L⁴Zn₂(OAc)₂** | 6 | 41.6 | 416 | 70 | 91 |
| **L⁴Mg₂(OAc)₂** | 3.5 | 38.1 | 381 | 109 | > 99 |
| **Catalyst System 2** | 2.4 | 44.5 | 445 | 184 | 95 |
| **[L⁴ZnMg(OAc)₂]** | 2.4 | 57.8 | 578 | 239 | 96 |

| | | | | | |
|---|---|---|---|---|---|
| All copolymerizations carried out at in a Schlenk tube at 100 °C and 1 bar CO₂, at a 1:1000 CHO:catalyst loading. | | | | | |

### iii) Copolymerisation of Cyclohexene oxide/CO₂ for Catalyst system 6 and corresponding homo-bimetallic catalyst

**Table 6: CHO/CO₂ Copolymerisation data for Catalyst System 6 and related homo-bimetallic catalyst**

| **Catalyst** | **Time (h)** | **Conversion (%)** | **TON** | **TOF (h⁻¹)** | **Selectivity Polymer %** |
|---|---|---|---|---|---|
| **L³Zn₂(OAc)₂** | 24 | 28.8 | 288 | 12 | 96 |
| **Catalyst System 6** | 6 | 24.2 | 242 | 42 | > 99 |

| | | | | | |
|---|---|---|---|---|---|
| All copolymerisations carried out in a Schlenk tube at 80 °C and 1 bar CO₂, at loading of 1:1000 CHO:catalyst. | | | | | |

### iv) Copolymerisation of Cyclohexene oxidelCO₂ for Catalyst system 5 and corresponding homo-bimetallic catalyst

**Table 7: CHO/CO₂ Copolymerisation data for Catalyst System 5 and related homo-bimetallic catalyst**

| **Catalyst** | **Time (h)** | **Conversion (%)** | **TON** | **TOF (h⁻¹)** | **Selectivity Polymer %** |
|---|---|---|---|---|---|
| **Catalyst System 5** | 2.25 | 52.9 | 529 | 144 | 93 |
| **L⁷Mg₂(OAc)₂** | 4 | 10.1 | 101 | 24.7 | > 99 |

| | | | | | |
|---|---|---|---|---|---|
| All copolymerisations carried out in a Schlenk tube at 100 °C and 1 bar CO₂, at loading of 1:1000 CHO:catalyst. | | | | | |

### v) Copolymerisation of Cyclohexene oxidelCO₂ for Catalyst system 14

**Table 8: CHO/CO₂ Copolymerisation data for Catalyst System 14**

| **Catalyst** | **Time (h)** | **Conversion (%)** | **TON** | **TOF (h⁻¹)** | **Selectivity Polymer %** |
|---|---|---|---|---|---|
| **Catalyst System 14** | 6 | 25.8 | 258 | 43 | 95 |
| **Catalyst System 14 + 10 eq. iPrOH** | 6 | 16.6 | 166 | 27.3 | 95 |

| | | | | | |
|---|---|---|---|---|---|
| All copolymerisations carried out in a Schlenk tube at 80 °C and 1 bar CO₂, at loading of 1:1000 CHO:catalyst. | | | | | |

Tables 4 and 5 compare the catalytic activity of homo-bimetallic complexes and their corresponding hetero-bimetallic Catalyst Systems, as well as the high purity hetero-bimetallic complexes. It can be clearly observed from Table 4 that the mixed Catalyst System **7** (which contains -65% [L¹MgZnBr₂] by ¹H NMR) shows similar activity to the homo-bimetallic Mg complex [L¹MgZnBr₂] and significantly greater activity than the di-zinc analogue. The high purity hetero-bimetallic [L¹MgZnBr₂] shows a significantly greater activity than Catalyst System **7** and either of the homo-bimetallic complexes. Table 5 demonstrates that the mixed Catalyst System **2** (already containing a significant amount of the hetero-bimetallic complex [L⁴ZnMg(OAc)₂]) shows a much increased activity when compared to the two homo-bimetallic species based on the same ligand structure. The purified hetero-bimetallic compound [L⁴ZnMg(OAc)₂] shows even greater activity, demonstrating the surprising activity of the hetero-bimetallic systems in comparison to their homo-metallic analogues and the Catalyst Mixtures containing the homo-bimetallic compounds.

Tables 6 and 7 demonstrate the increased activity of the hetero-bimetallic catalyst systems in comparison to one of the corresponding homo-bimetallic catalysts. Table 8 demonstrates the catalytic activity of Catalyst System **14** with and without an added chain transfer agent (iso-propanol).

### vi) Copolymerisation of Cyclohexene oxidelCO₂ for other metals

**Table 9: CHO/CO₂ Copolymerisation data for Catalyst Systems containing other metals**

| **Catalyst** | **Time (h)** | **Conversion (%)** | **TON** | **TOF (h⁻¹)** | **Selectivity Polymer %** |
|---|---|---|---|---|---|
| Catalyst System 12 (Zn/Co) | 4 | 17 | 172 | 43 | > 99 |
| Catalyst System 13 (Zn/Co) | 24 | 51 | 512 | 21 | > 99 |
| Catalyst System 9 (Zn/Fe) | 4 | 7 | 65 | 16 | 97 |
| Catalyst System 10 (Zn/Fe) | 6 | 2 | 18 | 3 | 69 |

| | | | | | |
|---|---|---|---|---|---|
| All copolymerisations carried out in a Schlenk tube at 80 °C and 1 bar CO₂, at loading of 1:1000 CHO:catalyst. | | | | | |

Table 9 demonstrates the catalyst activity of further catalyst systems **9, 10, 12** and **13** which contain other mixed metal systems (Zn/Co and Zn/Fe). All the systems are active catalysts.

## Claims

1. A catalyst of formula (I): 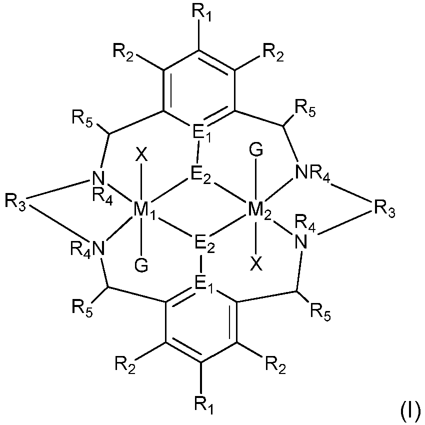 wherein:
M₁ is Zn and M₂ is Mg;
R₁ and R₂ are independently selected from hydrogen, halide, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
R₃ is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
R₄ is independently selected from H, or optionally substituted aliphatic, heteroaliphatic, alicyclic, heteroalicyclic, aryl, heteroaryl, alkylheteroaryl or alkylaryl;
R₅ is H, or optionally substituted aliphatic, heteroaliphatic, alicyclic, heteroalicyclic, aryl, heteroaryl, alkylheteroaryl or alkylaryl;
E₁ is C, E₂ is O;
X is independently selected from OC(O)R^{x}, OSO₂R^{x}, OSOR^{x}, OSO(R^{x})₂, S(O)R^{x}, OR^{x}, phosphinate, halide, nitrate, hydroxyl, carbonate, amino, amido or optionally substituted aliphatic, heteroaliphatic, alicyclic, heteroalicyclic, aryl or heteroaryl;
Rₓ is independently hydrogen, or optionally substituted aliphatic, haloaliphatic, heteroaliphatic, alicyclic, heteroalicyclic, aryl, alkylaryl or heteroaryl; and
G is absent or independently selected from a neutral or anionic donor ligand which is a Lewis base.

2. The catalyst according to claim 1, wherein each occurrence of R₂, R₄ and R₅ are H, and R₃ is an optionally substituted propylene.

3. The catalyst according to claim 1 or claim 2, wherein R₁ is independently selected from hydrogen, halide, amino, nitro, sulfoxide, sulfonyl, silyl, sulfinate, and optionally substituted alkyl, alkenyl, aryl, heteroaryl, alkoxy or alkylthio.

4. The catalyst according to any preceding claim, wherein X is independently OC(O)R^{x}, OSO₂R^{x}, OS(O)R^{x}, OSO(R^{x})₂, S(O)R^{x}, OR^{x}, halide, nitrate, hydroxyl, carbonate, amino, amido, and optionally substituted alkyl, heteroalkyl, aryl or heteroaryl.

5. The catalyst according to any preceding claim, wherein R^{x} is independently optionally substituted alkyl, alkenyl, alkynyl, heteroalkyl, aryl, heteroaryl or alkylaryl.

6. The catalyst according to any preceding claim having the formula: 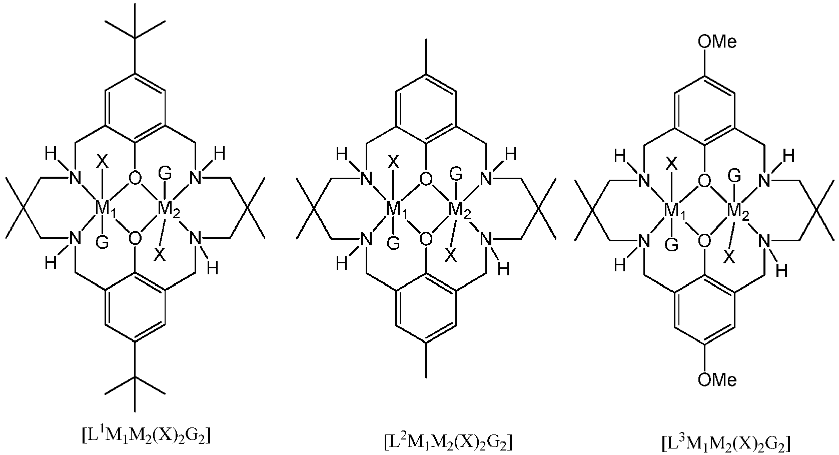 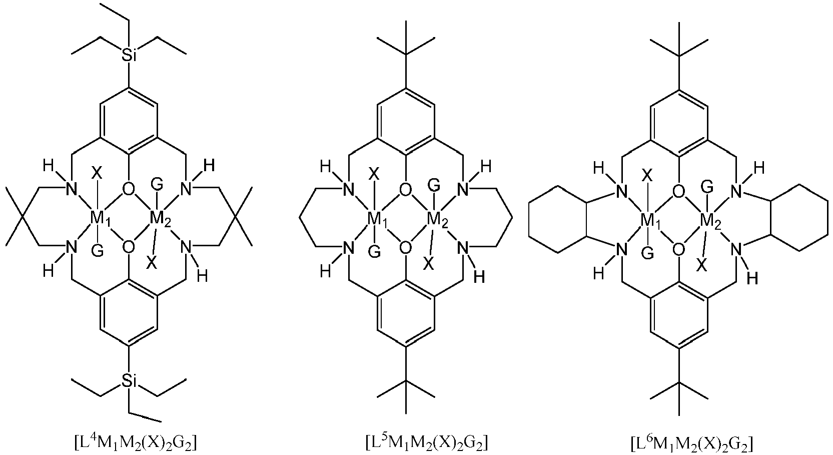 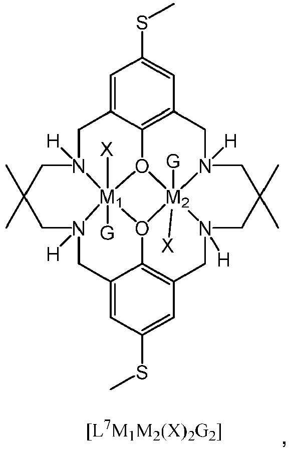 wherein either occurrence of G is either absent or present and wherein X, G M₁ and M₂ are as defined in any preceding claim, preferably wherein X is OAc or halide.

7. A catalyst system comprising a catalyst as defined in any of claims 1 to 6.

8. The catalyst system according to claim 7, further comprising a second catalyst or a co-catalyst.

9. The catalyst system according to claim 8, wherein the second catalyst is a compound of formula (Ic): 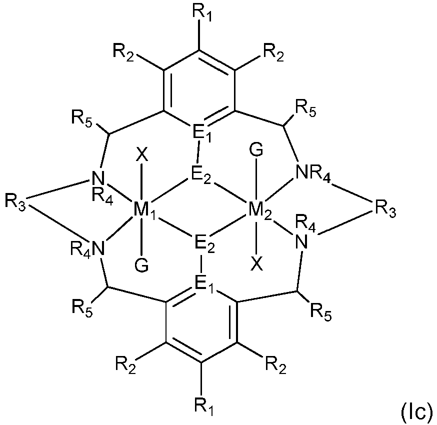
wherein R₁ to R₅, E₁, E₂, G and X are as defined in any of claims 1 to 5,
M₁ is Zn(II) and M₂ is Mg(II), or wherein the second catalyst is selected from [L¹Mg₂(OAc)₂] and [L¹Zn₂(OAc)₂].

10. A process for the reaction of:
(i) carbon dioxide with an epoxide;
(ii) an epoxide and an anhydride, or
(iii) a lactide and/or a lactone,
in the presence of a catalyst as claimed in any one of claims 1 to 6 or a catalyst system as claimed in any one of claims 7 to 9, optionally wherein the process is carried out in the presence of a chain transfer agent.

11. A process for the production of a catalyst of formula (I) 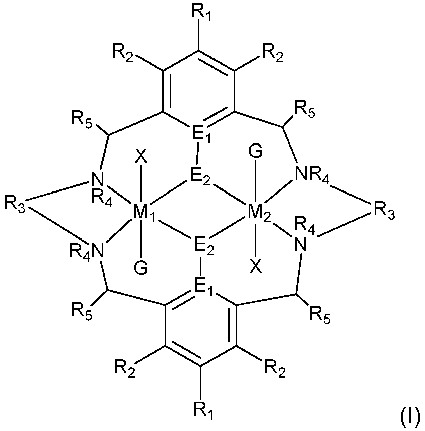 said process comprising the steps of:
a) Reacting a ligand of formula (Ib): 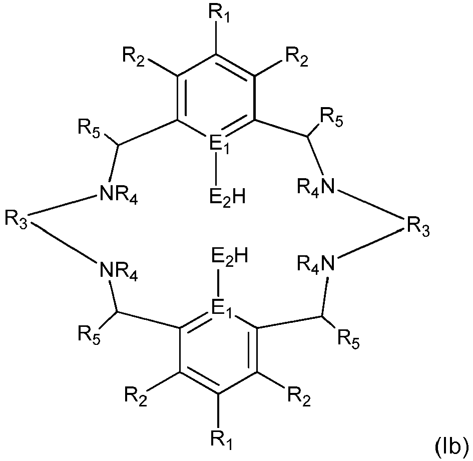 with a compound of formula (IV):
M₁(R_{M1})ₙ (IV)
n corresponds to the oxidation state of M₁;
R_{M1} is independently selected from hydrogen, and optionally substituted alkyl, alkenyl, alkynyl, cycloalkyl, cycloalkenyl, cycloalkynyl, aryl, heteroaryl, amino, alkoxy, aryloxy, alkylthio or alkylaryl; and
b) Reacting the product of step a) with a compound of formula (V):
M₂(X)ₘ (V)
m corresponds to the oxidation state of M₂;
c) optionally adding a compound comprising G;
wherein
M₁ and M₂ are different and are independently selected from Mg, Zn, Fe, Co, Al and Cr;
R₁ and R₂ are independently selected from hydrogen, halide, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
R₃ is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
R₄ is independently selected from H, or optionally substituted aliphatic, heteroaliphatic, alicyclic, heteroalicyclic, aryl, heteroaryl, alkylheteroaryl or alkylaryl;
R₅ is H, or optionally substituted aliphatic, heteroaliphatic, alicyclic, heteroalicyclic, aryl, heteroaryl, alkylheteroaryl or alkylaryl;
E₁ is C, E₂ is O, S or NH or E₁ is N and E₂ is O;
X is independently selected from OC(O)R^{x}, OSO₂R^{x}, OSOR^{x}, OSO(R^{x})₂, S(O)R^{x}, OR^{x}, phosphinate, halide, nitrate, hydroxyl, carbonate, amino, amido or optionally substituted aliphatic, heteroaliphatic, alicyclic, heteroalicyclic, aryl or heteroaryl;
Rₓ is independently hydrogen, or optionally substituted aliphatic, haloaliphatic, heteroaliphatic, alicyclic, heteroalicyclic, aryl, alkylaryl or heteroaryl; and
G is absent or independently selected from a neutral or anionic donor ligand which is a Lewis base.

12. The process according to claim 11, wherein each R_{M1} is independently selected from optionally substituted alkyl, alkenyl, aryl, heteroaryl, alkoxy, aryloxy, amino, thioalkyl and alkylaryl.

13. The process according to claims 11 or 12, wherein M₁ is Zn and M₂ is Mg.

14. The process according to any one of claims 11 to 13, wherein each occurrence of R₂, R₄ and R₅ are H, R₃ is an optionally substituted propylene, E₁ is C and E₂ is O, S or NH, preferably wherein R₁ is independently selected from hydrogen, halide, amino, nitro, sulfoxide, sulfonyl, silyl, sulfinate, and optionally substituted alkyl, alkenyl, aryl, heteroaryl, alkoxy or alkylthio.

15. The process according to any one of claims 11 to 14, wherein X is independently OC(O)R^{x}, OSO₂R^{x}, OS(O)R^{x}, OSO(R^{x})₂, S(O)R^{x}, OR^{x}, halide, nitrate, hydroxyl, carbonate, amino, amido, and optionally substituted alkyl, heteroalkyl, aryl or heteroaryl, preferably wherein R^{x} is independently optionally substituted alkyl, alkenyl, alkynyl, heteroalkyl, aryl, heteroaryl or alkylaryl.

## Patentansprüche

1. Katalysator der Formel (I): 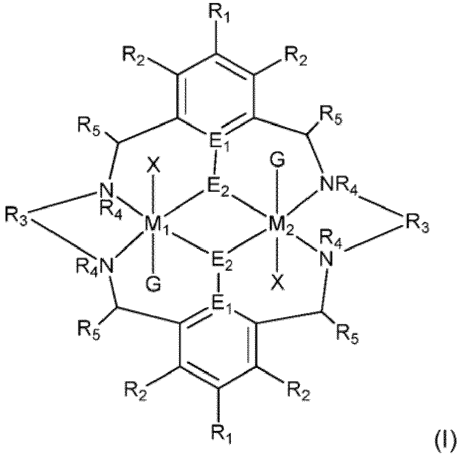 wobei:
M₁ für Zn steht und M₂ für Mg steht;
R₁ und R₂ unabhängig aus Wasserstoff, Halogenid, einer Nitrogruppe, einer Nitrilgruppe, einem Imin, einem Amin, einer Ethergruppe, einer Silylgruppe, einer Silylethergruppe, einer Sulfoxidgruppe, einer Sulfonylgruppe, einer Sulfinatgruppe oder einer Acetylidgruppe oder einer gegebenenfalls substituierten Alkyl-, Alkenyl-, Alkinyl-, Halogenalkyl-, Aryl-, Heteroaryl-, Alkoxy-, Aryloxy-, Alkylthio-, Arylthio-, Alicyclyl- oder Heteroalicyclylgruppe ausgewählt sind;
R₃ unabhängig aus gegebenenfalls substituiertem Alkylen, Alkenylen, Alkinylen, Heteroalkylen, Heteroalkenylen, Heteroalkinylen, Arylen, Heteroarylen oder Cycloalkylen ausgewählt ist, wobei Alkylen, Alkenylen, Alkinylen, Heteroalkylen, Heteroalkenylen und Heteroalkinylen gegebenenfalls durch Aryl, Heteroaryl, Alicyclyl oder Heteroalicyclyl unterbrochen sein können;
R₄ unabhängig aus H oder gegebenenfalls substituiertem Aliphat, Heteroaliphat, Alicyclyl, Heteroalicyclyl, Aryl, Heteroaryl, Alkylheteroaryl oder Alkylaryl ausgewählt ist;
R₅ für H oder gegebenenfalls substituiertes Aliphat, Heteroaliphat, Alicyclyl, Heteroalicyclyl, Aryl, Heteroaryl, Alkylheteroaryl oder Alkylaryl ausgewählt ist;
E₁ für C steht, E₂ für O steht;
X unabhängig aus OC(O)R^{x}, OSO₂R^{x}, OSOR^{x}, OSO(R^{x})₂, S(O)R^{x}, OR^{x}, Phosphinat, Halogenid, Nitrat, Hydroxyl, Carbonat, Amino, Amido oder gegebenenfalls substituiertem Aliphat, Heteroaliphat, Alicyclyl, Heteroalicyclyl, Aryl oder Heteroaryl ausgewählt ist;
Rₓ unabhängig für Wasserstoff oder gegebenenfalls substituiertes Aliphat, Halogenaliphat, Heteroaliphat, Alicyclyl, Heteroalicyclyl, Aryl, Alkylaryl oder Heteroaryl steht; und
G jeweils unabhängig abwesend ist oder unabhängig aus einem neutralen oder anionischen Donorliganden, bei dem es sich um eine Lewis-Base handelt, ausgewählt ist.

2. Katalysator nach Anspruch 1, wobei R₂, R₄ und R₅ bei jedem Auftreten für H stehen und R₃ für ein gegebenenfalls substituiertes Propylen steht.

3. Katalysator nach Anspruch 1 oder Anspruch 2, wobei R₁ unabhängig aus Wasserstoff, Halogenid, Amino, Nitro, Sulfoxid, Sulfonyl, Silyl, Sulfinat und gegebenenfalls substituiertem Alkyl, Alkenyl, Aryl, Heteroaryl, Alkoxy oder Alkylthio ausgewählt ist.

4. Katalysator nach einem der vorhergehenden Ansprüche, wobei X unabhängig für OC(O)R^{x}, OSO₂R^{x}, OS(O)R^{x}, OSO(R^{x})₂, S(O)R^{x}, OR^{x}, Halogenid, Nitrat, Hydroxyl, Carbonat, Amino, Amido und gegebenenfalls substituiertes Alkyl, Heteroalkyl, Aryl oder Heteroaryl steht.

5. Katalysator nach einem der vorhergehenden Ansprüche, wobei Rₓ unabhängig für gegebenenfalls substituiertes Alkyl, Alkenyl, Alkinyl, Heteroalkyl, Aryl, Heteroaryl oder Alkylaryl steht.

6. Katalysator nach einem der vorhergehenden Ansprüche mit der Formel: 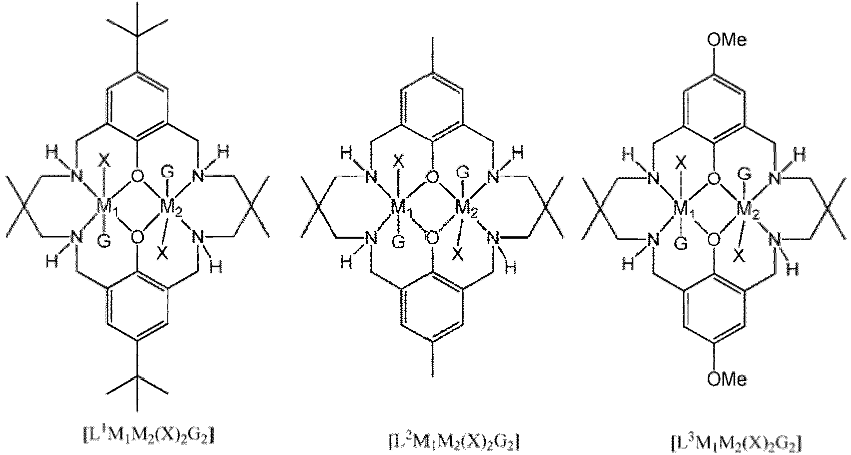 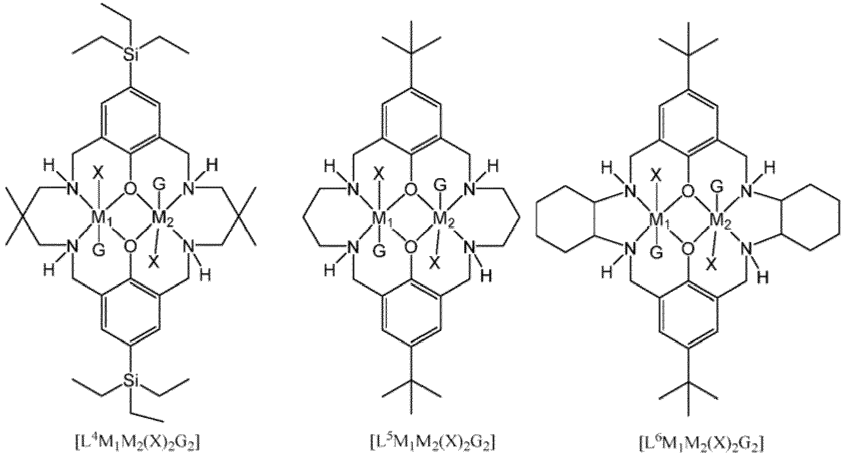 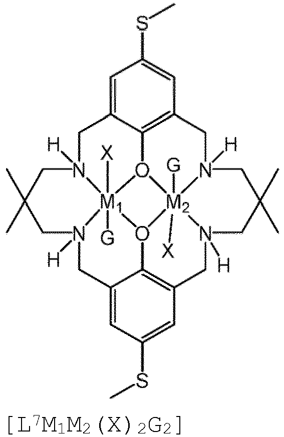 wobei G bei jedem Auftreten entweder abwesend oder anwesend ist und wobei X, G, M₁ und M₂ wie in einem der vorhergehenden Ansprüche definiert sind, vorzugsweise wobei X für OAc oder Halogenid steht.

7. Katalysatorsystem, umfassend eine Verbindung gemäß einem der Ansprüche 1 bis 6.

8. Katalysatorsystem nach Anspruch 7, ferner umfassend einen zweiten Katalysator oder einen Cokatalysator.

9. Katalysatorsystem nach Anspruch 8, wobei es sich bei dem zweiten Katalysator um eine Verbindung der Formel (Ic) handelt: 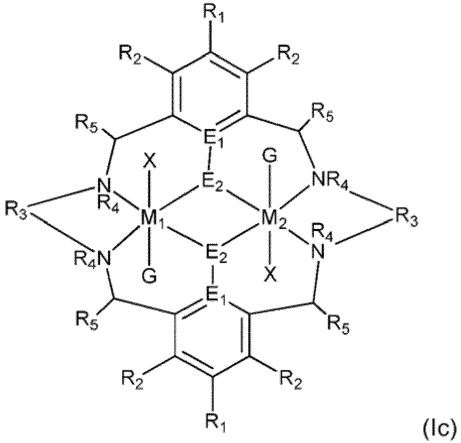
wobei R₁ bis R₅, E₁, E₂, G und X wie in einem der Ansprüche 1 bis 5 definiert sind,
M₁ für Zn(II) steht und M₂ für Mg(II) steht,
oder wobei der zweite Katalysator aus [L¹Mg₂(OAc)₂] und [L¹Zn₂(OAc)₂] ausgewählt ist.

10. Verfahren zur Umsetzung von:
(i) Kohlendioxid mit einem Epoxid;
(ii) einem Epoxid und einem Anhydrid oder
(iii) einem Lactid und/oder einem Lacton in Gegenwart eines Katalysators gemäß einem der Ansprüche 1 bis 6 oder eines Katalysatorsystems gemäß einem der Ansprüche 7 bis 9, gegebenenfalls wobei das Verfahren in Gegenwart eines Kettenübertragungsmittels duchgeführt wird.

11. Verfahren zur Herstellung eines Katalysators der Formel (I) 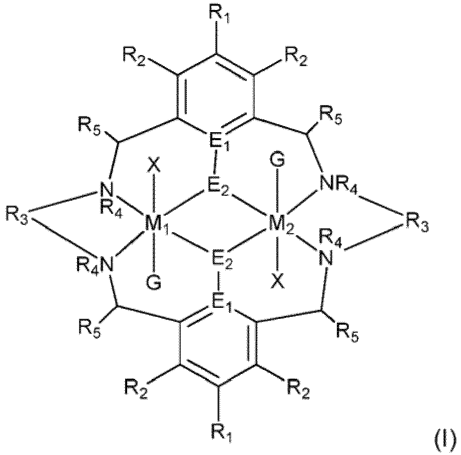 wobei das Verfahren die folgenden Schritte umfasst:
a) Umsetzen eines Liganden der Formel (Ib): 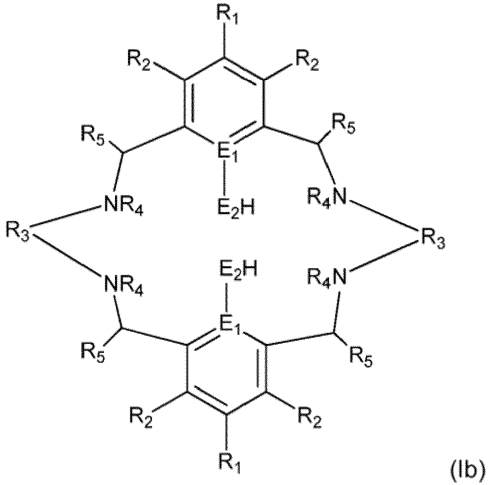 mit einer Verbindung der Formel (IV):
M₁(R_{M1})ₙ (IV)
wobei n der Oxidationsstufe von M₁ entspricht;
R_{M1} unabhängig aus Wasserstoff und gegebenenfalls substituiertem Alkyl, Alkenyl, Alkinyl, Cycloalkyl, Cycloalkenyl, Cycloalkinyl, Aryl, Heteroaryl, Amino, Alkoxy, Aryloxy, Alkylthio oder Alkylaryl ausgewählt ist; und
b) Umsetzen des Produkts aus Schritt a) mit einer Verbindung der Formel (V):
M₂(X)ₘ (V)
wobei m der Oxidationsstufe von M₂ entspricht;
c) gegebenenfalls Zugeben einer Verbindung, die G umfasst;
wobei
M₁ und M₂ gleich oder verschieden sind und unabhängig aus Mg, Zn, Fe, Co, Al und Cr ausgewählt sind;
R₁ und R₂ unabhängig aus Wasserstoff, Halogenid, einer Nitrogruppe, einer Nitrilgruppe, einem Imin, einem Amin, einer Ethergruppe, einer Silylgruppe, einer Silylethergruppe, einer Sulfoxidgruppe, einer Sulfonylgruppe, einer Sulfinatgruppe oder einer Acetylidgruppe oder einer gegebenenfalls substituierten Alkyl-, Alkenyl-, Alkinyl-, Halogenalkyl-, Aryl-, Heteroaryl-, Alkoxy-, Aryloxy-, Alkylthio-, Arylthio-, Alicyclyl- oder Heteroalicyclylgruppe ausgewählt sind;
R₃ unabhängig aus gegebenenfalls substituiertem Alkylen, Alkenylen, Alkinylen, Heteroalkylen, Heteroalkenylen, Heteroalkinylen, Arylen, Heteroarylen oder Cycloalkylen ausgewählt ist, wobei Alkylen, Alkenylen, Alkinylen, Heteroalkylen, Heteroalkenylen und Heteroalkinylen gegebenenfalls durch Aryl, Heteroaryl, Alicyclyl oder Heteroalicyclyl unterbrochen sein können;
R₄ unabhängig aus H oder gegebenenfalls substituiertem Aliphat, Heteroaliphat, Alicyclyl, Heteroalicyclyl, Aryl, Heteroaryl, Alkylheteroaryl oder Alkylaryl ausgewählt ist;
R₅ für H oder gegebenenfalls substituiertes Aliphat, Heteroaliphat, Alicyclyl, Heteroalicyclyl, Aryl, Heteroaryl, Alkylheteroaryl oder Alkylaryl steht; E₁ für C steht, E₂ für O, S oder NH steht oder E₁ für N steht und E₂ für O steht;
X unabhängig aus OC(O)R^{x}, OSO₂R^{x}, OSOR^{x}, OSO(R^{x})₂, S(O)R^{x}, OR^{x}, Phosphinat, Halogenid, Nitrat, Hydroxyl, Carbonat, Amino, Amido oder gegebenenfalls substituiertem Aliphat, Heteroaliphat, Alicyclyl, Heteroalicyclyl, Aryl oder Heteroaryl ausgewählt ist;
Rₓ unabhängig für Wasserstoff oder gegebenenfalls substituiertes Aliphat, Halogenaliphat, Heteroaliphat, Alicyclyl, Heteroalicyclyl, Aryl, Alkylaryl oder Heteroaryl steht; und
G jeweils unabhängig abwesend ist oder unabhängig aus einem neutralen oder anionischen Donorliganden, bei dem es sich um eine Lewis-Base handelt, ausgewählt ist.

12. Verfahren nach Anspruch 11, wobei R_{M1} jeweils unabhängig aus gegebenenfalls substituiertem Alkyl, Alkenyl, Aryl, Heteroaryl, Alkoxy, Aryloxy, Amino, Thioalkyl und Alkylaryl ausgewählt ist.

13. Verfahren nach Anspruch 11 oder 12, wobei M₁ für Zn steht und M₂ für Mg steht.

14. Verfahren nach einem der Ansprüche 11 bis 13, wobei R₂, R₄ und R₅ bei jedem Auftreten für H stehen, R₃ für ein gegebenenfalls substituiertes Propylen steht, E₁ für C steht und E₂ für O, S oder NH steht, vorzugsweise wobei R₁ unabhängig aus Wasserstoff, Halogenid, Amino, Nitro, Sulfoxid, Sulfonyl, Silyl, Sulfinat und gegebenenfalls substituiertem Alkyl, Alkenyl, Aryl, Heteroaryl, Alkoxy oder Alkylthio ausgewählt ist.

15. Verfahren nach einem der Ansprüche 11 bis 14, wobei X unabhängig für OC(O)R^{x}, OSO₂R^{x}, OS(O)R^{x}, OSO(R^{x})₂, S(O)R^{x}, OR^{x}, Halogenid, Nitrat, Hydroxyl, Carbonat, Amino, Amido und gegebenenfalls substituiertes Alkyl, Heteroalkyl, Aryl oder Heteroaryl steht, vorzugsweise wobei Rₓ unabhängig für gegebenenfalls substituiertes Alkyl, Alkenyl, Alkinyl, Heteroalkyl, Aryl, Heteroaryl oder Alkylaryl steht.

## Revendications

1. Catalyseur de formule (I) : 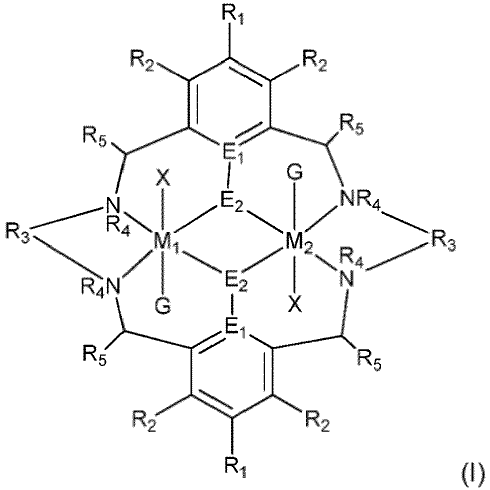 dans lequel:
M₁ est Zn et M₂ est Mg ;
R₁ et R₂ sont indépendamment choisis entre l'atome d'hydrogène, un halogénure, un groupe nitro, un groupe nitrile, une imine, une amine, un groupe éther, un groupe silyle, un groupe éther de silyle, un groupe sulfoxyde, un groupe sulfonyle, un groupe sulfinate et un groupe acétylure et un groupe alkyle, alcényle, alcynyle, halogénoalkyle, aryle, hétéroaryle, alcoxy, aryloxy, alkylthio, arylthio, alicyclique ou hétéroalicyclique éventuellement substitué ;
R₃ est indépendamment choisi parmi les groupes alkylène, alcénylène, alcynylène, hétéroalkylène, hétéroalcénylène, hétéroalcynylène, arylène, hétéroarylène ou cycloalkylène éventuellement substitués, les groupes alkylène, alcénylène, alcynylène, hétéroalkylène, hétéroalcénylène et hétéroalcynylène pouvant éventuellement être interrompus par un groupe aryle, hétéroaryle, alicyclique ou hétéroalicyclique ;
R₄ est indépendamment choisi entre H et un groupe aliphatique, hétéroaliphatique, alicyclique, hétéroalicyclique, aryle, hétéroaryle, alkylhétéroaryle ou alkylaryle éventuellement substitué ;
R₅ est H ou un groupe aliphatique, hétéroaliphatique, alicyclique, hétéroalicyclique, aryle, hétéroaryle, alkylhétéroaryle ou alkylaryle éventuellement substitué ;
E₁ est C, E₂ est O ;
X est indépendamment choisi parmi les groupes OC(O)R^{x}, OSO₂R^{x}, OSOR^{x}, OSO(R^{x})₂, S(O)R^{x}, OR^{x}, phosphinate, halogénure, nitrate, hydroxyle, carbonate, amino, amido ou les groupes aliphatiques, hétéroaliphatiques, alicycliques, hétéroalicycliques, aryle ou hétéroaryle éventuellement substitués ;
R^{x} est indépendamment l'atome d'hydrogène ou un groupe aliphatique, halogénoaliphatique, hétéroaliphatique, alicyclique, hétéroalicyclique, aryle, alkylaryle ou hétéroaryle éventuellement substitué ; et
G est absent ou est indépendamment choisi parmi un ligand donneur neutre ou anionique qui est une base de Lewis.

2. Catalyseur selon la revendication 1, dans lequel chaque occurrence de R₂, R₄ et R₅ est H et R₃ est un groupe propylène éventuellement substitué.

3. Catalyseur selon la revendication 1 ou la revendication 2, dans lequel R₁ est indépendamment choisi entre l'atome d'hydrogène, un groupe halogénure, amino, nitro, sulfoxyde, sulfonyle, silyle, sulfinate et un groupe alkyle, alcényle, aryle, hétéroaryle, alcoxy ou alkylthio éventuellement substitué.

4. Catalyseur selon une quelconque revendication précédente, dans lequel X est indépendamment un groupe OC(O)R^{x}, OSO₂R^{x}, OS(O)R^{x}, OSO(R^{x})₂, S(O)R^{x}, OR^{x}, halogénure, nitrate, hydroxyle, carbonate, amino, amido ou un groupe alkyle, hétéroalkyle, aryle ou hétéroaryle éventuellement substitué.

5. Catalyseur selon une quelconque revendication précédente, dans lequel R^{x} est indépendamment un groupe alkyle, alcényle, alcynyle, hétéroalkyle, aryle, hétéroaryle ou alkylaryle éventuellement substitué.

6. Catalyseur selon une quelconque revendication précédente répondant à la formule : 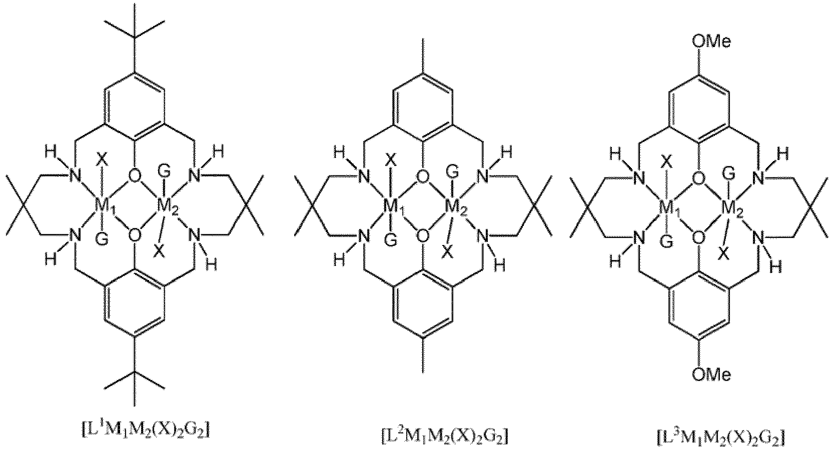 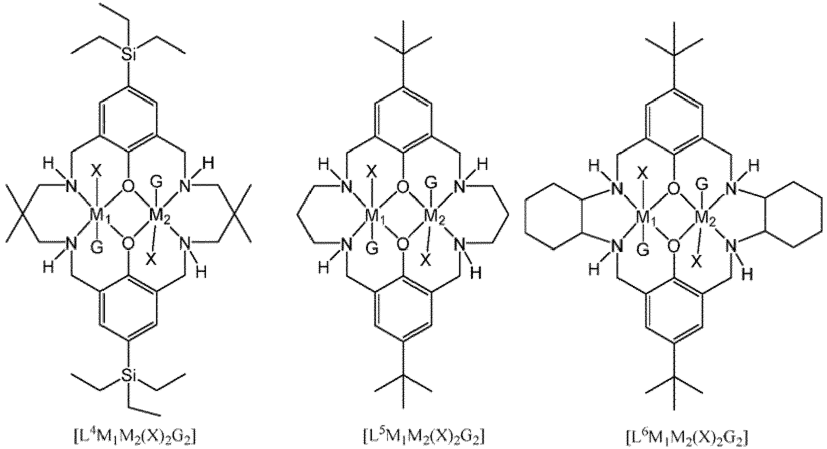 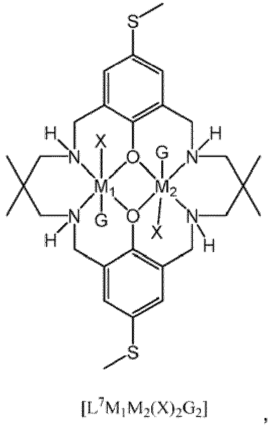 dans lequel chaque occurrence de G est soit absente soit présente et dans lequel X, G, M₁ et M₂ sont tels que définis dans une quelconque revendication précédente, de préférence dans lequel X est un groupe OAc ou halogénure.

7. Système catalyseur comprenant un catalyseur tel que défini dans l'une quelconque des revendications 1 à 6.

8. Système catalyseur selon la revendication 7, comprenant en outre un second catalyseur ou un cocatalyseur.

9. Système catalyseur selon la revendication 8, dans lequel le second catalyseur est un composé de formule (Ic) : 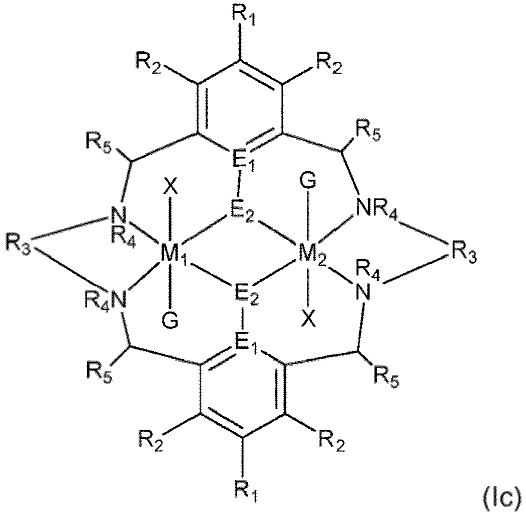 dans lequel
R₁ à R₅, E₁, E₂, G et X sont tels que définis dans l'une quelconque des revendications 1 à 5,
M₁ est Zn(II) et M₂ est Mg(II),
ou dans lequel le second catalyseur est choisi entre [L¹Mg₂(OAc)₂] et [L¹Zn₂(OAc)₂].

10. Procédé pour la réaction de :
(i) du dioxyde de carbone avec un époxyde ;
(ii) un époxyde et un anhydride ou
(iii)un lactide et/ou une lactone,
en présence d'un catalyseur tel que revendiqué dans l'une quelconque des revendications 1 à 6 ou d'un système catalyseur tel que revendiqué dans l'une quelconque des revendications 7 à 9, éventuellement le procédé étant effectué en présence d'un agent de transfert de chaîne.

11. Procédé pour la production d'un catalyseur de formule (I) 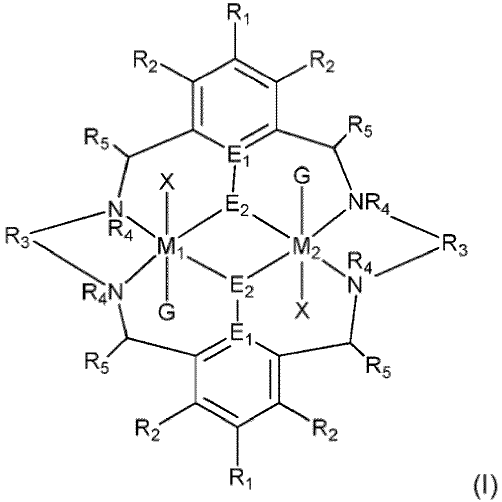 ledit procédé comprenant les étapes consistant à :
a) faire réagir un ligand de formule (Ib) : 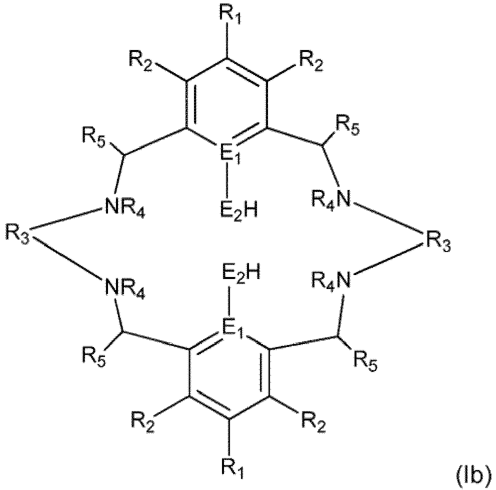 avec un composé de formule (IV) :
M₁(R_{M1})ₙ (IV)
où n correspond à l'état d'oxydation de M₁ ;
R_{M1} est indépendamment choisi entre l'atome d'hydrogène et un groupe alkyle, alcényle, alcynyle, cycloalkyle, cycloalcényle, cycloalcynyle, aryle, hétéroaryle, amino, alcoxy, aryloxy, alkylthio ou alkylaryle éventuellement substitué ; et
b) faire réagir le produit de l'étape a) avec un composé de formule (V) :
M₂(X)ₘ (V)
où m correspond à l'état d'oxydation de M₂ ;
c) éventuellement ajouter un composé comprenant G ; dans lequel
M₁ et M₂ sont différents et sont indépendamment choisis parmi Mg, Zn Fe, Co, Al et Cr ;
R₁ et R₂ sont indépendamment choisis entre l'atome d'hydrogène, un halogénure, un groupe nitro, un groupe nitrile, une imine, une amine, un groupe éther, un groupe silyle, un groupe éther de silyle, un groupe sulfoxyde, un groupe sulfonyle, un groupe sulfinate et un groupe acétylure et un groupe alkyle, alcényle, alcynyle, halogénoalkyle, aryle, hétéroaryle, alcoxy, aryloxy, alkylthio, arylthio, alicyclique ou hétéroalicyclique éventuellement substitué ;
R₃ est indépendamment choisi parmi les groupes alkylène, alcénylène, alcynylène, hétéroalkylène, hétéroalcénylène, hétéroalcynylène, arylène, hétéroarylène ou cycloalkylène éventuellement substitués, les groupes alkylène, alcénylène, alcynylène, hétéroalkylène, hétéroalcénylène et hétéroalcynylène pouvant éventuellement être interrompus par un groupe aryle, hétéroaryle, alicyclique ou hétéroalicyclique ;
R₄ est indépendamment choisi entre H et un groupe aliphatique, hétéroaliphatique, alicyclique, hétéroalicyclique, aryle, hétéroaryle, alkylhétéroaryle ou alkylaryle éventuellement substitué ;
R₅ est H ou un groupe aliphatique, hétéroaliphatique, alicyclique, hétéroalicyclique, aryle, hétéroaryle, alkylhétéroaryle ou alkylaryle éventuellement substitué ;
E₁ est C, E₂ est O, S ou NH ou E₁ est N et E₂ est O ;
X est indépendamment choisi parmi les groupes OC(O)R^{x}, OSO₂R^{x}, OSOR^{x}, OSO(R^{x})₂, S(O)R^{x}, OR^{x}, phosphinate, halogénure, nitrate, hydroxyle, carbonate, amino, amido ou les groupes aliphatiques, hétéroaliphatiques, alicycliques, hétéroalicycliques, aryle ou hétéroaryle éventuellement substitués ;
R^{x} est indépendamment l'atome d'hydrogène ou un groupe aliphatique, halogénoaliphatique, hétéroaliphatique, alicyclique, hétéroalicyclique, aryle, alkylaryle ou hétéroaryle éventuellement substitué ; et
G est absent ou est indépendamment choisi parmi un ligand donneur neutre ou anionique qui est une base de Lewis.

12. Procédé selon la revendication 11, dans lequel chaque R_{M1} est indépendamment choisi parmi les groupes alkyle, alcényle, aryle, hétéroaryle, alcoxy, aryloxy, amino, thioalkyle et alkylaryle éventuellement substitués.

13. Procédé selon les revendications 11 ou 12, dans lequel M₁ est Zn et M₂ est Mg.

14. Procédé selon l'une quelconque des revendications 11 à 13, dans lequel chaque occurrence de R₂, R₄ et R₅ est H, R₃ est un groupe propylène éventuellement substitué, E₁ est C et E₂ est O, S ou NH, de préférence dans lequel R₁ est indépendamment choisi entre l'atome d'hydrogène, un groupe halogénure, amino, nitro, sulfoxyde, sulfonyle, silyle, sulfinate et un groupe alkyle, alcényle, aryle, hétéroaryle, alcoxy ou alkylthio éventuellement substitué.

15. Procédé selon l'une quelconque des revendications 11 à 14, dans lequel X est indépendamment un groupe OC(O)R^{x}, OSO₂R^{x}, OS(O)R^{x}, OSO(R^{x})₂, S(O)R^{x}, OR^{x}, halogénure, nitrate, hydroxyle, carbonate, amino, amido, ou alkyle, hétéroalkyle, aryle ou hétéroaryle éventuellement substitué, de préférence R^{x} étant indépendamment un groupe alkyle, alcényle, alcynyle, hétéroalkyle, aryle, hétéroaryle ou alkylaryle éventuellement substitué.
